(19) Europäisches Patentamt
European Patent Office
Office européen des brevets

(11) **EP 4 697 786 A1**

(12) **EUROPEAN PATENT APPLICATION**
published in accordance with Art. 153(4) EPC

(43) Date of publication:
**18.02.2026 Bulletin 2026/08**

(21) Application number: 24733484.0

(22) Date of filing: **11.04.2024**

(51) International Patent Classification (IPC):
**H04W 24/08** (2009.01)    **H04B 17/373** (2015.01)
**H04W 76/18** (2018.01)    **H04W 72/53** (2023.01)
**H04W 24/02** (2009.01)    **G06N 20/00** (2019.01)
**H04L 41/16** (2022.01)

(52) Cooperative Patent Classification (CPC):
**H04B 7/0626; G06N 20/00; H04B 17/373;**
**H04L 41/16; H04W 24/02; H04W 24/08;**
**H04W 72/53; H04W 76/18**

(86) International application number:
**PCT/KR2024/004874**

(87) International publication number:
**WO 2024/215115 (17.10.2024 Gazette 2024/42)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **11.04.2023   US 202363458635 P**

(71) Applicant: **LG Electronics Inc.**
**Yeongdeungpo-gu**
**Seoul 07336 (KR)**

(72) Inventors:
• **LEE, Seungmin**
  **Seoul 06772 (KR)**
• **SEO, Hanbyul**
  **Seoul 06772 (KR)**
• **BYUN, Jaihyun**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **WIRELESS COMMUNICATION METHOD AND APPARATUS USING ARTIFICIAL INTELLIGENCE/MACHINE LEARNING TECHNIQUE**

(57)    An operation method of a first device 100 in wireless communication system is proposed. The method may comprise: obtaining an uncertainty level value related to a first time interval; and obtaining a measurement value for a second time interval including the first time interval, wherein whether a measurement value related to the first time interval is reflected in generation of channel state information for the second time interval may be determined based on an artificial intelligence module that takes the uncertainty level value as an input.

## FIG. 19

obtaining an uncertainty level value related to a first time interval — S1910

obtaining a measurement value for a second time interval including a first time interval — S1920

Description

## TECHNICAL FIELD

This disclosure relates to a wireless communication system.

## BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

## DISCLOSURE

### TECHNICAL SOLUTION

According to an embodiment of the present disclosure, a method for performing, by a first device, wireless communication may be proposed. For example, the method may comprise: obtaining an uncertainty level value related to a first time interval; and obtaining a measurement value for a second time interval including the first time interval, wherein whether a measurement value related to the first time interval is reflected in generation of channel state information for the second time interval may be determined based on an artificial intelligence module that takes the uncertainty level value as an input.

According to an embodiment of the present disclosure, a first device for performing wireless communication may be proposed. For example, the first device may comprise: at least one transceiver; at least one processor; and at least one memory operably connectable to the at least one processor and storing instructions. For example, the instructions, based on being executed by the at least one processor, may cause the first device to perform operations, wherein the operations comprise: obtaining an uncertainty level value related to a first time interval; and obtaining a measurement value for a second time interval including the first time interval, wherein whether a measurement value related to the first time interval is reflected in generation of channel state information for the second time interval is determined based on an artificial intelligence module that takes the uncertainty level value as an input.

According to an embodiment of the present disclosure, a device adapted to control a first user equipment, UE, may be proposed. For example, the device may comprise: at least one processor; and at least one memory operably connectable to the at least one processor and storing instructions. For example, the instructions, based on being executed by the at least one processor, may cause the first UE to perform operations, wherein the operations comprise: obtaining an uncertainty level value related to a first time interval; and obtaining a measurement value for a second time interval including the first time interval, wherein whether a measurement value related to the first time interval is reflected in generation of channel state information for the second time interval may be determined based on an artificial intelligence module that takes the uncertainty level value as an input.

According to an embodiment of the present disclosure, a non-transitory computer-readable storage medium storing instructions may be proposed. For example, the instructions, based on being executed, may cause a first device to: obtain an uncertainty level value related to a first time interval; and obtain a measurement value for a second time interval including the first time interval, wherein whether a measurement value related to the first time interval is reflected in generation of channel state information for the second time interval may be determined based on an artificial intelligence module that takes the uncertainty level value as an input.

According to an embodiment of the present disclosure, a method for performing, by a second device, wireless communication may be proposed. For example, the method may comprise: receiving, from a first device, channel state information for a second time interval including a first time interval, wherein whether a measurement value related to the first time interval is reflected in generation of a channel state information for the second time interval may be determined based on an artificial intelligence module that takes an uncertainty level value related to the first time interval as an input.

According to an embodiment of the present disclosure, a second device for performing wireless communication may be proposed. For example, the second device may comprise: at least one transceiver; at least one processor; and at least one memory operably connectable to the at least one processor and storing instructions. For example, the instructions, based on being executed by the at least one processor, may cause the second device to perform operations, wherein the operations comprise: receiving, from a first device, channel state information for a second time interval including a first time interval, wherein whether a measurement value related to the first time interval is reflected in generation of a channel state information for the second time interval may be determined based on an artificial intelligence module that takes an uncertainty level value related to the first time interval as an input.

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows an example of an NTN typical scenario based on a transparent payload, according to one embodiment of the present disclosure.

FIG. 4 shows an example of an NTN typical scenario based on a regenerative payload, according to one embodiment of the present disclosure.

FIG. 5 shows an example of a sensing operation, according to one embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows a method in which a UE that has reserved transmission resource(s) informs another UE of the transmission resource(s), based on an embodiment of the present disclosure.

FIG. 10 shows a smart vehicle with an internal communication system and an external communication system, according to one embodiment of the present disclosure.

FIG. 11 shows the format of movement information exchanged when movement information is exchanged, according to one embodiment of the present disclosure.

FIG. 12 shows utilization of path prediction data elements of a BSM, according to one embodiment of the present disclosure.

FIG. 13 shows a path represented by a list of points, according to one embodiment of the present disclosure.

FIG. 14 shows a delivering route of information through a gateway, according to one embodiment of the present disclosure.

FIG. 15 shows a delivering route for movement information when an AI model is located at an application layer of a communication module, according to one embodiment of the present disclosure.

FIG. 16 shows an exchange of movement information between a mobility and a base station, according to one embodiment of the present disclosure.

FIG. 17 shows communication using AI/ML performed between a vehicle and a base station, according to one embodiment of the present disclosure.

FIG. 18 shows a procedure for determining a coordination operation of a wireless communication by an AI module, according to one embodiment of the present disclosure.

FIG. 19 shows a procedure for a first device to perform wireless communication, according to one embodiment of the present disclosure.

FIG. 20 shows a procedure for a second device to perform wireless communication, according to one embodiment of the present disclosure.

FIG. 21 shows a communication system 1, based on an embodiment of the present disclosure.

FIG. 22 shows wireless devices, based on an embodiment of the present disclosure.

FIG. 23 shows a signal process circuit for a transmission signal, based on an embodiment of the present disclosure.

FIG. 24 shows another example of a wireless device, based on an embodiment of the present disclosure.

FIG. 25 shows a hand-held device, based on an embodiment of the present disclosure.

FIG. 26 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

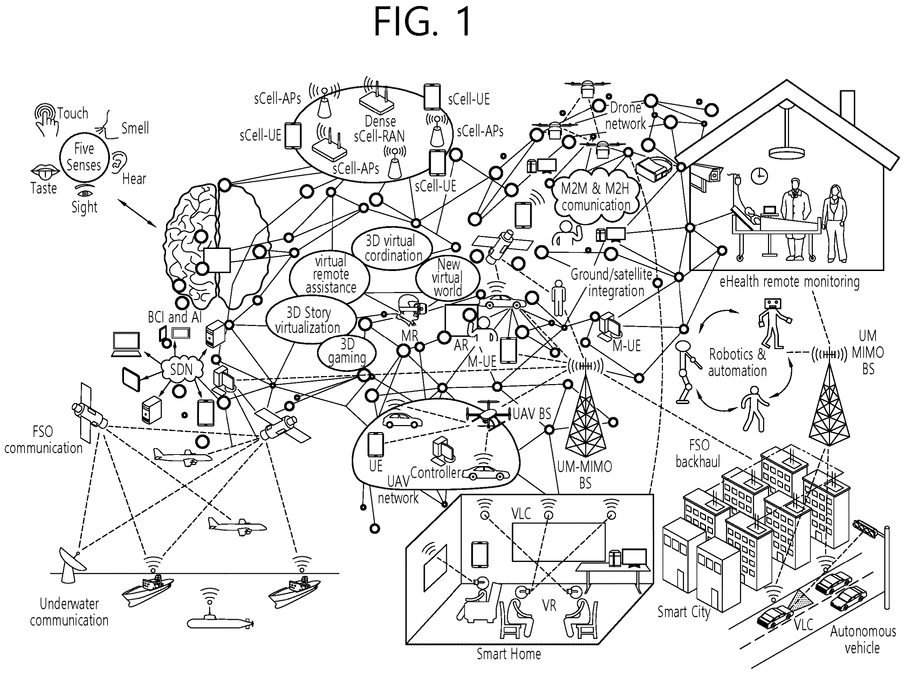

FIG. 1 shows a communication structure that can be provided in a 6G system, according to one embodiment of the present disclosure. The embodiment of FIG. 1 may be combined with various embodiments of the present disclosure.

In 6G, new network features may include the follows.

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

The following describes the core implementation technologies for 6G systems.

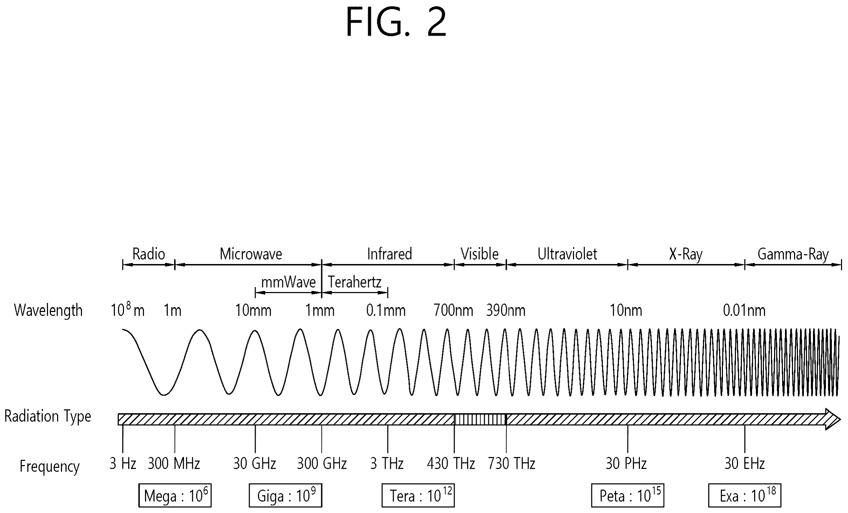

- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.

- Advanced air mobility, AAM: AAM is the higher-level concept of urban air mobility (UAM), which refers to air transportation in urban centers, and may include travel between urban centers and regional hubs.

- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.

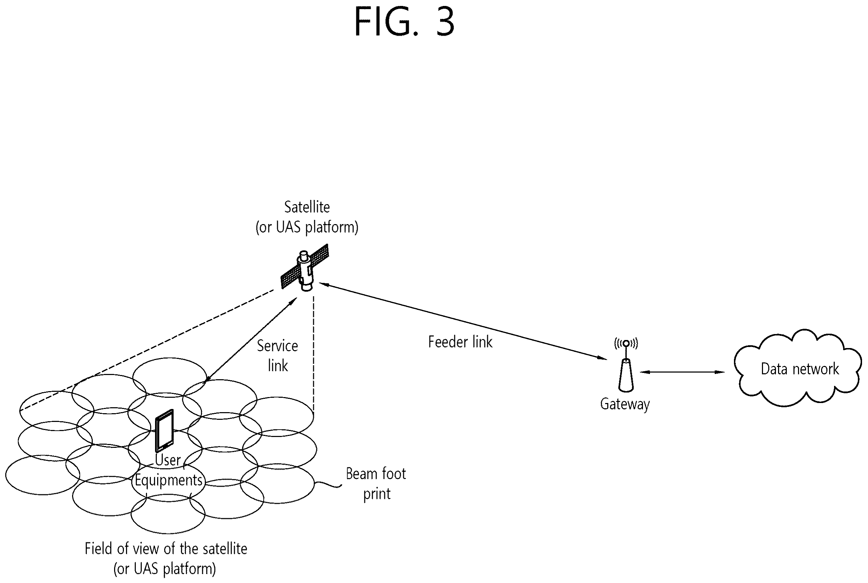

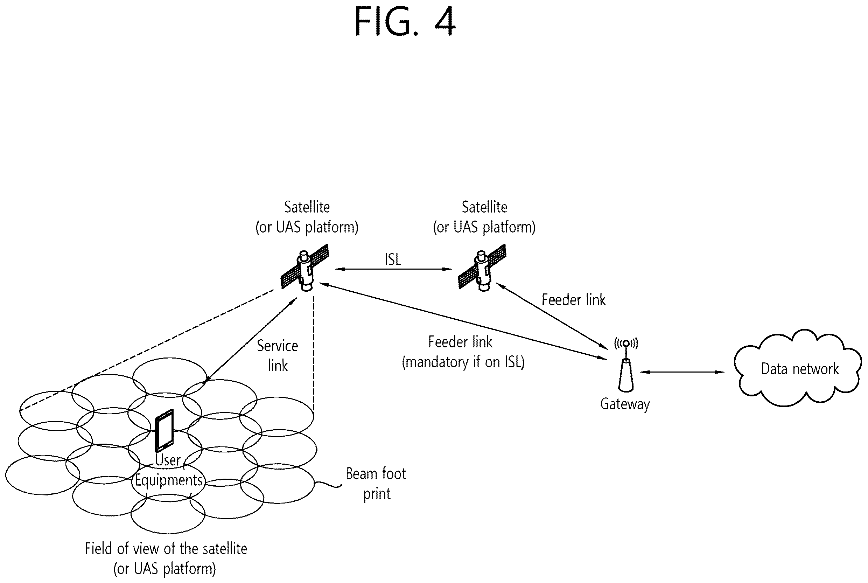

- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).

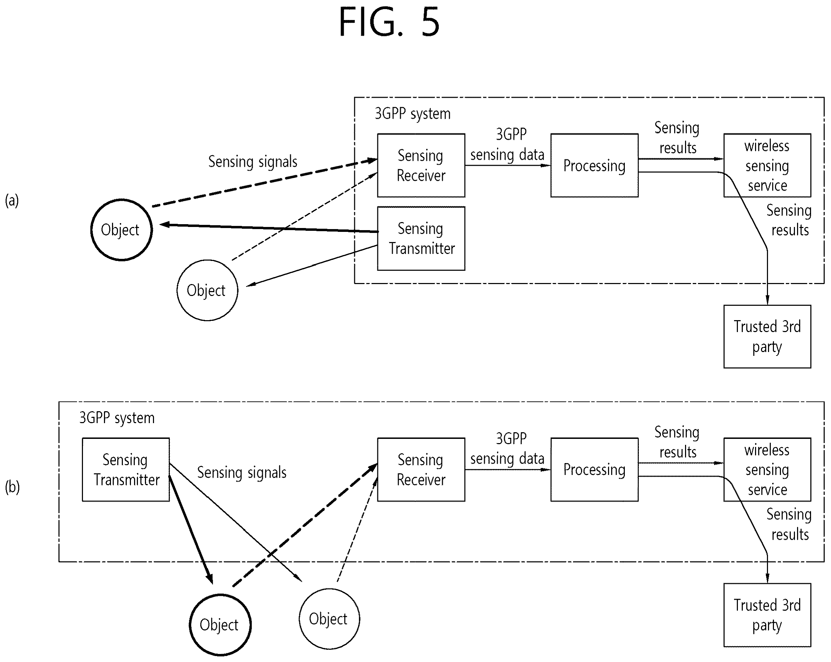

- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP or Extended CP is used.

[Table 2]

| CP Type | SCS ($15*2^u$) | $N^{slot}_{symb}$ | $N^{frame,u}_{slot}$ | $N^{subframe,u}_{slot}$ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

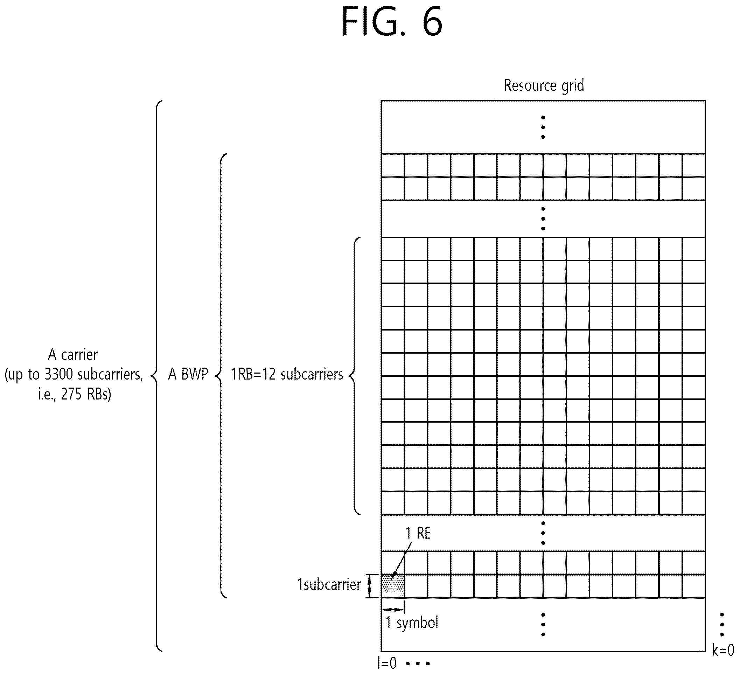

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

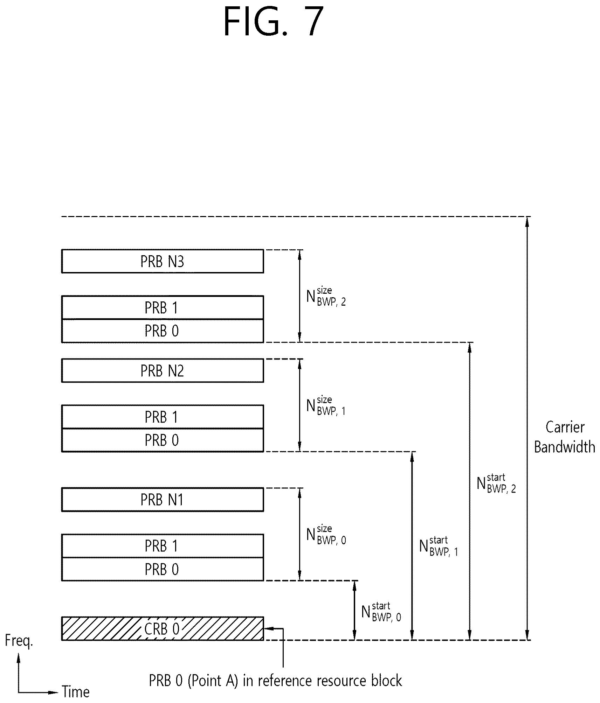

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

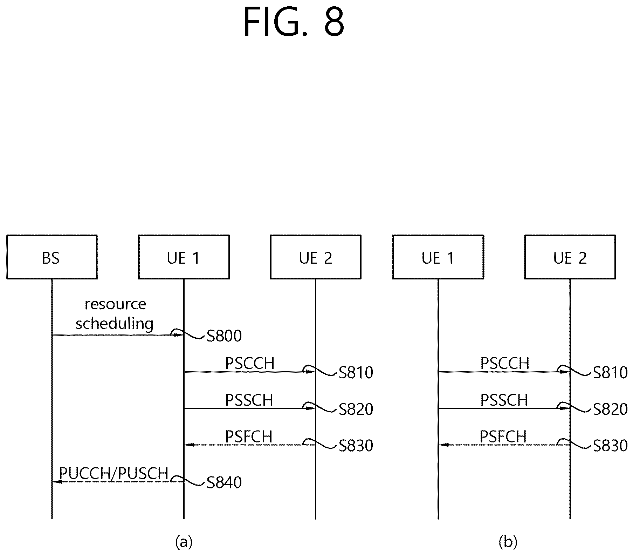

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources ($r_0, r_1, r_2, ...$) which may be subject to re-evaluation and a set of resources ($r_0', r_1', r_2', ...$) which may be subject to pre-emption.
- it is up to UE implementation to determine the subset of resources as requested by higher layers before or after the slot $r_i'' - T_3$, where $r_i''$ is the slot with the smallest slot index among ($r_0, r_1, r_2, ...$) and ($r_0', r_1', r_2', ...$), and $T_3$ is equal to $T_{proc,1}^{SL}$, where $T_{proc,1}^{SL}$ is defined in slots, and where $\mu_{SL}$ is the SCS configuration of the SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination ($p_i, p_j$), where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P_{rsvp\_TX}'$.

Notation:

$(t_0'^{SL}, t_1'^{SL}, t_2'^{SL}, ...)$ may denote the set of slots which belongs to the sidelink resource pool.

For example, a UE may select a set of candidate resources (Sa) based on Table 3. For example, when resource (re)selection is triggered, a UE may select a candidate resource set (Sa) based on Table 3. For example, when re-evaluation or pre-emption is triggered, a UE may select a candidate resource set (Sa) based on Table 3.

[Table 3]

| The following steps are used: |
| --- |
| 1) A candidate single-slot resource for transmission $R_{x,y}$ is defined as a set of $L_{subCH}$ contiguous sub-channels with sub-channel $x+j$ in slot $t_y'^{SL}$ where $j = 0,..., L_{subCH} - 1$. The UE shall assume that any set of $L_{subCH}$ contiguous sub-channels included in the corresponding resource pool within the time interval $[n + T_1, n + T_2]$ correspond to one candidate single-slot resource, where<br><br>- selection of $T_1$ is up to UE implementation under $0 \leq T_1 \leq T_{proc,1}^{SL}$, where $T_{proc,1}^{SL}$ is defined in slots in Table 8.1.4-2 where $\mu_{SL}$ is the SCS configuration of the SL BWP; |

(continued)

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T_{proc,0}^{SL})$ where $T_0$ is defined above and $T_{proc,0}^{SL}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the i-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t_m'^{SL}$ in Step 2.

- for any periodicity value allowed by the higher layer parameter *sl-ResourceReservePeriodList* and a hypothetical SCI format 1-A received in slot $t_m'^{SL}$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t_m'^{SL}$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t_m'^{SL}$ or the same SCI format which, if and only if the *'Resource reservation period'* field is present in the received SCI format 1-A, is assumed to be received in slot(s) $t_{m+q \times P_{rsvp\_RX}'}'^{SL}$ determines according to clause 8.1.5 the set of resource blocks and slots which overlaps with $R_{x,y+j \times P_{rsvp\_TX}'}$ for q=1, 2, ..., Q and j=0, 1, ..., $C_{resel}$ - 1. Here, $P_{rsvp\_RX}'$ is $P_{rsvp\_RX}$ converted to units of logical slots according to clause 8.1.7, $Q = \left\lceil \frac{T_{scal}}{P_{rsvp\_RX}} \right\rceil$ if $P_{rsvp\_RX} < T_{scal}$ and $n' - m \leq P_{rsvp\_RX}'$, where $t_{n'}'^{SL} = n$ if slot $n$ belongs to the set $\left( t_0'^{SL}, t_1'^{SL}, \ldots, t_{T'max-1}'^{SL} \right)$, otherwise slot $t_{n'}'^{SL}$ is the first slot after slot $n$ belonging to the set $\left( t_0'^{SL}, t_1'^{SL}, \ldots, t_{T'max-1}'^{SL} \right)$; otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r_i'$ from the set $(r_0', r_1', r_2', ...)$ meets the conditions below then the UE shall report pre-emption of the resource $r_i'$ to higher layers

- $r_i'$ is not a member of $S_A$, and

- $r_i'$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

(continued)

> - *sl-PreemptionEnable* is provided and is equal to 'enabled' and $prio_{TX} > prio_{RX}$
> - *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 4 and 5.

[Table 4]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. $C_{resel}$ is determined by $C_{resel}$=10*SL_RESOURCE_RESELECTION_COUNTER, where SL_RESOURCE_RESELECTION_COUNTER is provided by higher layers. ...

If partial sensing is configured by higher layers then the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where $j$ = 0, ... , $L_{subCH}$ - 1. The UE shall determine by its implementation a set of subframes which consists of at least Y subframes within the time interval [n + $T_1$, n + $T_2$] where selections of $T_1$ and $T_2$ are up to UE implementations under $T_1 \leq 4$ and $T_{2min}(prio_{TX}) \leq T_2 \leq 100$, if $T_{2min}$ ($prio_{TX}$) is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where $i = (a - 1) * 8 + b$.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.

- PSSCH-RSRP measurement according to the received SCI format 1 is higher than $Th_{prio_{TX}, prio_{RX}}$.

- the SCI format received in subframe $t_m^{SL}$ or the same SCI format 1 which is assumed to be received in subframe(s) $t_{m+q \times P_{step} \times P_{rsvp_{RX}}}^{SL}$ determines according to 14.1.1.4C the set of resource blocks and subframes which overlaps with $R_{x,y+j \times P'_{rsvp\_TX}}$ for q=1, 2, ..., Q and j=0, 1, ..., $C_{resel}$ - 1. Here, $Q = \dfrac{1}{P_{rsvp\_RX}}$ if $P_{rsvp\_RX}$ and $y'$ - m $\leq P_{step} \times P_{rsvp\_RX} + P_{step}$, where $t_{y'}^{SL}$ is the last subframe of the Y subframes , and Q = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 5]

7) For a candidate single-subframe resource $R_{x,y}$ remaining in the set $S_A$, the metric $E_{x,y}$ is defined as the linear average of S-RSSI measured in sub-channels $x+k$ for $k = 0, ..., L_{subCH}$ - 1 in the monitored subframes in Step 2 that can be expressed by $t^{SL}_{y-P_{step}*j}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel $x+j$ in subframe $t^{SL}_y$ where $j = 0, ..., L_{subCH}$ - 1. The UE shall assume that any set of $L_{subCH}$ contiguous sub-channels included in the corresponding PSSCH resource pool within the time interval [n + $T_1$, n + $T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

Meanwhile, in a future system, a UE may perform inter-UE transmission (e.g., SL transmission) and/or reception operations in an unlicensed band. The operation in the unlicensed band may be preceded by a channel sensing operation (e.g., energy detection/measurement) for the channel to be used prior to the UE performing the transmission, according to the result of the channel sensing, the UE may perform the transmission for the unlicensed band only if a channel or a resource blocks (e.g., RB) set to be used is determined to be IDLE (e.g., the measured energy is less than or equal to, or less than a specific threshold value), and according to the result of the channel sensing, the UE may cancel all or a part of the transmission for the unlicensed band if a channel or a resource block (e.g., RB) set to be used is determined to be BUSY (e.g., the measured energy is greater than or equal to, or greater than a certain threshold value).

On the one hand, in the operation in the unlicensed band, the channel sensing operation may be omitted or simplified (the channel sensing interval may be relatively small) within a certain time period after transmission for a certain time interval of a UE, and on the other hand, after a certain time period after transmission, whether or not to transmit may be determined after performing a general channel sensing operation.

On the other hand, in a transmission in an unlicensed band, depending on the regulation or requirement, each of the size and/or power spectral density (PSD) of the time interval and/or frequency occupied area of the signal/channel transmitted by a UE may be greater than or equal to a certain level.

On the other hand, in the unlicensed band, to simplify the channel sensing, the fact that a channel occupied by the initial general channel sensing is occupied for a certain period of time may be informed through channel occupancy time (e.g., channel occupancy time (COT)) duration information, and the length of the channel occupancy time duration (e.g., COT duration) may be differently configured to have different maximum value depending on the priority or channel access priority class (CAPC) of the service or data packet.

On the one hand, a base station may share a channel occupancy time duration (e.g., COT duration) that it has obtained through channel sensing in the form of base station-to-UE control information transmission (e.g., DCI transmission), and a UE may perform a specific (indicated) channel sensing type and/or cyclic prefix (e.g., CP) extension within the channel occupancy time duration (e.g., COT duration) according to the base station-to-UE control information (e.g., DCI information) received from the base station. On the other hand, a UE may again share the channel occupancy time duration (e.g., COT duration) that it has obtained through channel sensing to a base station that is a target of the UE's UE-to-base station transmission (e.g., UL transmission), and the related information may be provided via UE-to-base station communication (e.g., UL communication) through the configured grant-related UE-to-base station control information (e.g., CG-UCI). In the above situations, a base station may perform simplified channel sensing within the channel occupancy time duration (e.g., COT duration) shared from the UE.

On the other hand, in the case of inter-UE communication (e.g., SL communication), there may be a situation in which a UE is indicated by a base station through base station-to-UE control information (e.g., DCI) or RRC signaling a resource to be used for inter-UE transmission (e.g., SL transmission), such as Mode 1 RA operation, and there may be an operation in which a UE performs SL transmission and reception through a sensing operation between UEs without an assistance of a base station, such as Mode 2 RA operation.

On the other hand, for channel access type 1, which can be used regardless of a channel occupancy time (e.g., COT) configuration, the procedures shown in Table 6 and Table 7 were performed for base station-to-UE transmission (e.g., DL transmission), and the procedures shown in Table 8 and Table 9 were performed for UE-to-base station transmission (e.g., UL transmission).

In the present disclosure, channel access may be mutually replaceable/substitutable with channel sensing.

[Table 6]

| |
|---|
| The eNB/gNB may transmit a transmission after first sensing the channel to be idle during the sensing slot durations of a defer duration $T_d$ and after the counter $N$ is zero in step 4. The counter $N$ is adjusted by sensing the channel for additional sensing slot duration(s) according to the steps below: <br><br> 1) set $N = N_{init}$, where $N_{init}$ is a random number uniformly distributed between 0 and $CW_p$, and go to step 4; <br> 2) if $N > 0$ and the eNB/gNB chooses to decrement the counter, set $N = N - 1$; <br> 3) sense the channel for an additional sensing slot duration, and if the additional sensing slot duration is idle, go to step 4; else, go to step 5; <br> 4) if $N = 0$, stop; else, go to step 2. <br> 5) sense the channel until either a busy sensing slot is detected within an additional defer duration $T_d$ or all the sensing slots of the additional defer duration $T_d$ are detected to be idle; <br> 6) if the channel is sensed to be idle during all the sensing slot durations of the additional defer duration $T_d$, go to step 4; else, go to step 5; <br><br> If an eNB/gNB has not transmitted a transmission after step 4 in the procedure above, the eNB/gNB may transmit a transmission on the channel, if the channel is sensed to be idle at least in a sensing slot duration $T_{sl}$ when the eNB/gNB is ready to transmit and if the channel has been sensed to be idle during all the sensing slot durations of a defer duration $T_d$ immediately before this transmission. If the channel has not been sensed to be idle in a sensing slot duration $T_{sl}$ when the eNB/gNB first senses the channel after it is ready to transmit or if the channel has been sensed to be not idle during any of the sensing slot durations of a defer duration $T_d$ immediately before this intended transmission, the eNB/gNB proceeds to step 1 after sensing the channel to be idle during the sensing slot durations of a defer duration $T_d$. <br><br> The defer duration $T_d$ consists of duration $T_f$ = 16us immediately followed by $m_p$ consecutive sensing slot durations $T_{sl}$, and $T_r$ includes an idle sensing slot duration $T_{sl}$ at start of $T_f$. |

[Table 7]

| |
|---|
| If a gNB transmits transmissions including PDSCH that are associated with channel access priority class $p$ on a channel, the gNB maintains the contention window value $CW_p$ and adjusts $CW_p$ before step 1 of the procedure described in clause 4.1.1 for those transmissions using the following steps: <br><br> 1) For every priority class $p \in \{1,2,3,4\}$, set $CW_p = CW_{min,p}$. <br> 2) If HARQ-ACK feedback is available after the last update of $W_p$, go to step 3. Otherwise, if the gNB transmission after procedure described in clause 4.1.1 does not include a retransmission or is transmitted within a duration $T_W$ from the end of the *reference duration* corresponding to the earliest DL channel occupancy after the last update of $CW_p$, go to step 5; otherwise go to step 4. |
| 3) The HARQ-ACK feedback(s) corresponding to PDSCH(s) in the reference duration for the latest DL channel occupancy for which HARQ-ACK feedback is available is used as follows: <br><br> a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |

(continued)

4) Increase $CW_p$ for every priority class $p \in \{1,2,3,4\}$ to the next higher allowed value.

5) For every priority class $p \in \{1,2,3,4\}$, maintain $CW_p$ as it is; go to step 2.

The *reference duration* and duration $T_w$ in the procedure above are defined as follows:

- The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment.

- $T_w = \max(T_A, T_B + 1ms)$ where $T_B$ is the duration of the transmission burst from start of the *reference duration* in ms and $T_A = 5ms$ if the absence of any other technology sharing the channel can not be guaranteed on a long-term basis (e.g. by level of regulation), and $T_A = 10ms$ otherwise.

If a gNB transmits transmissions using Type 1 channel access procedures associated with the channel access priority class p on a channel and the transmissions are not associated with explicit HARQ-ACK feedbacks by the corresponding UE(s), the gNB adjusts $CW_p$ before step 1 in the procedures described in subclase 4.1.1, using the latest $CW_p$ used for any DL transmissions on the channel using Type 1 channel access procedures associated with the channel access priority class p. If the corresponding channel access priority class p has not been used for any DL transmissions on the channel, $CW_p = CW_{min,p}$ is used.

[Table 8]

A UE may transmit the transmission using Type 1 channel access procedure after first sensing the channel to be idle during the slot durations of a defer duration $T_d$, and after the counter $N$ is zero in step 4. The counter $N$ is adjusted by sensing the channel for additional slot duration(s) according to the steps described below.

1) set $N = N_{init}$, where $N_{init}$ is a random number uniformly distributed between 0 and $CW_p$, and go to step 4;

2) if $N > 0$ and the UE chooses to decrement the counter, set $N = N - 1$;

3) sense the channel for an additional slot duration, and if the additional slot duration is idle, go to step 4; else, go to step 5;

4) if $N = 0$, stop; else, go to step 2.

5) sense the channel until either a busy slot is detected within an additional defer duration $T_d$ or all the slots of the additional defer duration $T_d$ are detected to be idle;

6) if the channel is sensed to be idle during all the slot durations of the additional defer duration $T_d$, go to step 4; else, go to step 5;

If a UE has not transmitted a UL transmission on a channel on which UL transmission(s) are performed after step 4 in the procedure above, the UE may transmit a transmission on the channel, if the channel is sensed to be idle at least in a sensing slot duration $T_{sl}$ when the UE is ready to transmit the transmission and if the channel has been sensed to be idle during all the slot durations of a defer duration $T_d$ immediately before the transmission. If the channel has not been sensed to be idle in a sensing slot duration $T_{sl}$ when the UE first senses the channel after it is ready to transmit, or if the channel has not been sensed to be idle during any of the sensing slot durations of a defer duration $T_d$ immediately before the intended transmission, the UE proceeds to step 1 after sensing the channel to be idle during the slot durations of a defer duration $T_d$. The defer duration $T_d$ consists of duration $T_f = 16us$ immediately followed by $m_p$ consecutive slot durations where each slot duration is $T_{sl} = 9us$, and $T_f$ includes an idle slot duration $T_{sl}$ at start of $T_f$

[Table 9]

If a UE transmits transmissions using Type 1 channel access procedures that are associated with channel access priority class $p$ on a channel, the UE maintains the contention window value $CW_p$ and adjusts $CW_p$ for those transmissions before step 1 of the procedure described in clause 4.2.1.1, using the following steps:

(continued)

| |
|---|
| 1) For every priority class $p \in \{1,2,3,4\}$, set $CW_p = CW_{min.p}$; |
| 2) If HARQ-ACK feedback is available after the last update of $CW_p$, go to step 3. Otherwise, if the UE transmission after procedure described in clause 4.2.1.1 does not include a retransmission or is transmitted within a duration $T_w$ from the end of the *reference duration* corresponding to the earliest UL channel occupancy after the last update of $CW_p$, go to step 5; otherwise go to step 4. <br><br> 3) The HARQ-ACK feedback(s) corresponding to PUSCH(s) in the *reference duration* for the latest UL channel occupancy for which HARQ-ACK feedback is available is used as follows: <br><br>     a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. <br><br> 4) Increase $CW_p$ for every priority class $p \in \{1,2,3,4\}$ to the next higher allowed value; <br><br> 5) For every priority class $p \in \{1,2,3,4\}$, maintain $CW_p$ as it is; go to step 2. <br><br> The HARQ-ACK feedback, *reference duration* and duration $T_w$ in the procedure above are defined as the following: <br><br> - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: <br><br>     - If a new transmission is indicated, 'ACK' is assumed for the transport blocks or code block groups in the corresponding PUSCH(s) for the TB-based and CBG-based transmission, respectively. <br><br>     - If a retransmission is indicated for TB-based transmissions, 'NACK' is assumed for the transport blocks in the corresponding PUSCH(s). <br><br>     - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. <br><br> - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. <br><br> - $T_w = \max(T_A, T_B + 1ms)$ where $T_B$ is the duration of the transmission burst from start of the *reference duration* in *ms* and $T_A = 5ms$ if the absence of any other technology sharing the channel cannot be guaranteed on a long-term basis (e.g. by level of regulation), and $T_A = 10ms$ otherwise. |

On the other hand, within a channel occupancy time (e.g., COT), a simplified channel access type 2 may be used before a transmission, and the procedure shown in Table 10 for base station-to-UE transmission (e.g., DL transmission) and the procedure shown in Table 11 for UE-to-base station transmission (e.g., UL transmission) is performed.

[Table 10]

| |
|---|
| 4.1.2 Type 2 DL channel access procedures <br> This clause describes channel access procedures to be performed by an eNB/gNB where the time duration spanned by sensing slots that are sensed to be idle before a downlink transmission(s) is deterministic. If an eNB performs Type 2 DL channel access procedures, it follows the procedures described in clause 4.1.2.1. |

(continued)

Type 2A channel access procedures as described in clause 4.1.2.1 are only applicable to the following transmission(s) performed by an eNB/gNB:

- Transmission(s) initiated by an eNB including discovery burst and not including PDSCH where the transmission(s) duration is at most 1*ms*, or
- Transmission(s) initiated by a gNB with only discovery burst or with discovery burst multiplexed with non-unicast information, where the transmission(s) duration is at most 1*ms*, and the discovery burst duty cycle is at most 1/20, or
- Transmission(s) by an eNB/ gNB following transmission(s) by a UE after a gap of 25*us* in a shared channel occupancy as described in clause 4.1.3.

Type 2B or Type 2C DL channel access procedures as described in clause 4.1.2.2 and 4.1.2.3, respectively, are applicable to the transmission(s) performed by a gNB following transmission(s) by a UE after a gap of 16*us* or up to 16*us*, respectively, in a shared channel occupancy as described in clause 4.1.3.

4.1.2.1 Type 2A DL channel access procedures

An eNB/gNB may transmit a DL transmission immediately after sensing the channel to be idle for at least a sensing interval $T_{short\_dl}$ = 25us. $T_{short\_dl}$ consists of a duration $T_f$ = 16us immediately followed by one sensing slot and $T_f$ includes a sensing slot at start of $T_f$. The channel is considered to be idle for $T_{short\_dl}$ if both sensing slots of $T_{short\_dl}$ are sensed to be idle.

4.1.2.2 Type 2B DL channel access procedures

A gNB may transmit a DL transmission immediately after sensing the channel to be idle within a duration of $T_f$ = 16*us*. $T_f$ includes a sensing slot that occurs within the last 9*us* of $T_f$. The channel is considered to be idle within the duration $T_f$ if the channel is sensed to be idle for a total of at least 5*us* with at least 4*us* of sensing occurring in the sensing slot.

4.1.2.3 Type 2C DL channel access procedures

When a gNB follows the procedures in this clause for transmission of a DL transmission, the gNB does not sense the channel before transmission of the DL transmission. The duration of the corresponding DL transmission is at most 584*us*.

[Table 11]

4.2.1.2 Type 2 UL channel access procedure

This clause describes channel access procedures by UE where the time duration spanned by the sensing slots that are sensed to be idle before a UL transmission(s) is deterministic.

If a UE is indicated by an eNB to perform Type 2 UL channel access procedures, the UE follows the procedures described in clause 4.2.1.2.1.

4.2.1.2.1 Type 2A UL channel access procedure

If a UE is indicated to perform Type 2A UL channel access procedures, the UE uses Type 2A UL channel access procedures for a UL transmission. The UE may transmit the transmission immediately after sensing the channel to be idle for at least a sensing interval $T_{short\_ul}$ = 25*us*. $T_{short\_ul}$ consists of a duration $T_f$ = 16*us* immediately followed by one sensing slot and $T_f$ includes a sensing slot at start of $T_f$. The channel is considered to be idle for $T_{short\_ul}$ if both sensing slots of $T_{short\_ul}$ are sensed to be idle.

4.2.1.2.2 Type 2B UL channel access procedure

If a UE is indicated to perform Type 2B UL channel access procedures, the UE uses Type 2B UL channel access procedure for a UL transmission. The UE may transmit the transmission immediately after sensing the channel to be idle within a duration of $T_f$ = 16*us*. $T_f$ includes a sensing slot that occurs within the last 9*us* of $T_f$. The channel is considered to be idle within the duration $T_f$ if the channel is sensed to be idle for total of at least 5*us* with at least 4*us* of sensing occurring in the sensing slot.

4.2.1.2.3 Type 2C UL channel access procedure

If a UE is indicated to perform Type 2C UL channel access procedures for a UL transmission, the UE does not sense the channel before the transmission. The duration of the corresponding UL transmission is at most 584*us*.

According to one embodiment of the present disclosure, a type 2A inter-UE channel access (e.g., SL channel access) may be in the same manner as a type 2A base station-to-UE and/or UE-to-base station channel access (e.g., DL and/or UL channel access), wherein a sensing interval of T_short_sl=25us and a T_f=16us interval immediately following the sensing interval may comprise one sensing slot, with T_f comprising a sensing slot at the beginning. Even for basic idle determination, the scheme of base station-to-UE or UE-to-base station communication (e.g., UL communication) may be used.

According to one embodiment of the present disclosure, a type 2B inter-UE channel access (e.g., SL channel access) may be in the same manner as a type 2B base station-to- UE and/or UE-to-base station channel access (e.g., DL and/or UL channel access), it may be a form with a sensing interval of T_f =16us, where T_f includes the sensing slot at the end of the 9us interval. Even for basic idle determination, the scheme of base station-to-UE or UE-to-base station communication (e.g., UL communication) may be used.

According to one embodiment of the present disclosure, a Type 2C inter-UE channel access (e.g., SL channel access) may be in the same manner as Type 2C base station-to-UE and/or UE-to-base station channel access (e.g., DL and/or UL channel access), it may be a form in which no channel sensing is performed. Instead, the time interval of the inter-UE transmission (e.g., SL transmission) may be up to 584us.

According to one embodiment of the present disclosure, a type 1 inter-UE channel access (e.g., SL channel access) may be the same scheme with a type 1 base station-to-UE and/or end-to-UE channel access (e.g., DL and/or UL channel access), i) it may randomly derive an integer value N based on a contention window size corresponding to a priority class, ii) if the channel sensing result for a defer duration of size T_d corresponding to the priority class is idle, it may decrement the counter value to N-1 for each idle in T_sl, and iii) if the value of the counter is zero, the UE may occupy a resource block (e.g., RB) set or channel that is subject to channel sensing.

However, if some of the channel sensing results for the above T_sl interval are determined to be idle, the counter value may be maintained and channel sensing may be continued until the channel sensing results for the defer duration of size T_d again become idle. In the above, the defer duration of the length T_d may be in the form of m_p consecutive T_sl after T_f=16us, where m_p is a value determined according to the priority class p, and may be a time interval in which channel sensing is performed with T_sl=9us.

According to one embodiment of the present disclosure, when a UE has occupied a channel via a type 1 inter-UE channel access (e.g., SL channel access) and the UE is not ready to transmit a sidelink transmission, the UE may set a defer duration of T_d and a sensing interval of T_sl immediately preceding the ready-to-transmit sidelink transmission, and if both are idle, the UE may immediately perform the sidelink transmission. Here, if any of the two are not idle, the UE may again perform a type 1 inter-UE channel access (e.g., SL channel access).

For example, if the sidelink transmission is difficult at the end of the channel sensing (e.g., if the end of the channel sensing is after the start of the sidelink transmission), the UE may reselect the sidelink transmission resource. For example, the reselected resource may be selected in consideration of the end time of the channel sensing and/or the length of the remaining sensing interval. For example, the remaining sensing interval may be a value derived assuming that the channel sensing is all idle.

In this specification, for example, unlicensed band may be mutually exchanged/substituted with shared spectrum.

Meanwhile, in various embodiments of the present disclosure, a transmitting UE (i.e., TX UE) may be a UE which transmits data to (target) receiving UE(s) (i.e., RX UE(s)). For example, the TX UE may be a UE which performs inter-UE physical channel transmission (e.g., PSCCH transmission and/or PSSCH transmission). For example, the TX UE may be a UE which transmits an inter-UE channel state information reference signal (e.g., SL CSI-RS) and/or an inter-UE channel state information (e.g., SL CSI) report request indication to (target) RX UE(s). For example, the TX UE may be a UE which transmits a (pre-defined) reference signal(s) (e.g., inter-UE physical sidelink shared channel (e.g., PSSCH) demodulation reference signal (e.g., DM-RS)) and/or inter-UE (L1) reference signal received power (e.g., SL (L1) RSRP) report request indicator, which is/are used for inter-UE (L1) reference signal received power (e.g., SL (L1) RSRP) measurement, to (target) to RX UE(s). For example, the TX UE may be a UE which transmits a (control) channel (e.g., inter-UE physical sidelink control channel (e.g., PSCCH), inter-UE physical sidelink shared channel (e.g., PSSCH), etc.) and/or reference signal(s) (e.g., DM-RS(s), CSI-RS(s), etc.) through the (control) channel, which is/are used for inter-UE radio link monitoring (e.g., SL RLM) operation(s) and/or inter-UE radio link failure (e.g., SL RLF) operation(s) of (target) RX UE(s).

Meanwhile, in various embodiments of the present disclosure, a receiving UE (i.e., RX UE) may be a UE which transmits inter-UE feedback (e.g., SL HARQ feedback) to transmitting UE(s) (i.e., TX UE(s)), based on whether or not data transmitted by TX UE(s) is decoded successfully and/or whether or not an inter-UE physical sidelink control channel (e.g., PSCCH) (related to inter-UE physical sidelink shared channel (e.g., PSSCH) scheduling) transmitted by TX UE(s) is detected/decoded successfully. For example, the RX UE may be a UE which performs inter-UE channel state information (e.g., SL CSI) transmission to TX UE(s) based on inter-UE channel state information reference signal(s) (e.g., SL CSI-RS(s)) and/or an inter-UE channel state information (e.g., SL CSI) report request indication received from TX UE(s). For example, the RX UE may be a UE which transmits, to TX UE(s), an inter-UE (L1) reference signal received power (e.g., SL (L1) RSRP) measurement value measured based on (pre-defined) reference signal(s) and/or inter-UE (L1) reference signal received power (e.g., SL (L1) RSRP) report request indication received from TX UE(s). For example, the RX UE may be a UE which transmits its own data to TX UE(s). For example, the RX UE may be a UE which performs inter-UE radio link monitoring (e.g., SL RLM) operation(s) and/or inter-UE radio link failure (e.g., SL RLF) operation(s) based on a (pre-configured) (control) channel and/or reference signal(s) through the (control) channel received from TX UE(s).

Meanwhile, in various embodiments of the present disclosure, when a receiving UE transmits inter-UE feedback (e.g., SL HARQ feedback) information for an inter-UE physical sidelink shared channel (e.g., PSSCH) and/or an inter-UE physical sidelink control channel (e.g., PSCCH) received from a transmitting UE, the following method may be considered or partly considered. Here, for example, the corresponding scheme or some schemes may be limitedly applied only when a receiving UE successfully decodes/detects an inter-UE physical sidelink control channel (e.g., PSCCH) for scheduling an inter-UE physical sidelink shared channel (e.g., inter-UE physical sidelink shared channel (e.g., PSSCH)).

- Option 1: transmit NACK information only when inter-UE physical sidelink shared channel (e.g., PSSCH) decoding/reception fails
- Option 2: transmit ACK information when inter-UE physical sidelink shared channel (e.g., PSSCH) decoding/reception is successful, or transmit NACK information when fails

Meanwhile, in the present specification, for example, a transmitting UE may transmit at least one of the following information to the receiving UE through inter-UE control information (e.g., SCI). Here, for example, a transmitting UE may transmit at least one of the following information to a receiving UE through first inter-UE control information (e.g., SCI) and/or a second inter-UE control information (e.g., SCI).

- inter-UE physical sidelink shared channel (e.g., PSSCH) (and/or inter-UE physical sidelink control channel (e.g., PSCCH)) related resource allocation information, e.g., the number/positions of time/frequency resources, resource reservation information (e.g., period), and/or
- inter-UE channel state information (e.g., SL CSI) report request indicator or inter-UE (L1) reference signal received power (e.g., SL (L1) RSRP) (and/or inter-UE (L1) reference signal received quality (e.g., SL (L1) RSRQ) and/or inter-UE (L1) reference signal strength indicator (e.g., SL (L1) RSSI)) report request indicator, and/or
- inter-UE channel state information (e.g., SL CSI) transmission indicator (or inter-UE (L1) reference signal received power (e.g., SL (L1) RSRP) (and/or inter-UE (L1) reference signal received quality (e.g., SL (L1) RSRQ) and/or inter-UE (L1) reference signal strength indicator (e.g., SL (L1) RSSI)) information transmission indicator)) (on inter-UE physical sidelink shared channel (e.g., PSSCH)), and/or
- MCS information, and/or
- Transmit power information, and/or
- L1 destination ID information and/or L1 source ID information, and/or
- inter-UE HARQ process ID information (e.g., SL HARQ process ID information), and/or
- New data indicator (NDI) information, and/or
- Redundancy version (RV) information, and/or
- (Transmission traffic/packet related) service quality (e.g., QoS) information (e.g., priority information), and/or
- inter-UE channel state information reference signal (e.g., SL CSI-RS) transmission indicator or information on the number of (to-be-transmitted) inter-UE channel state information reference signal (e.g., SL CSI-RS) antenna ports, and/or
- Location information of a transmitting UE or location (or distance region) information of a target receiving UE (for which inter-UE feedback (e.g., SL HARQ feedback) is requested), and/or
- Reference signal (e.g., DMRS, etc.) related to channel estimation and/or decoding of data to be transmitted through an inter-UE physical sidelink shared channel (e.g., PSSCH), e.g., information related to a pattern of a (time-frequency) mapping resource of a demodulation reference signal (e.g., DMRS), rank information, antenna port index information

Meanwhile, in various embodiments of the present disclosure, for example, an inter-UE physical sidelink control channel (e.g., PSCCH) may be replaced/substituted with at least one of a inter-UE control information (e.g., SCI), a first inter-UE control information (e.g., SCI) (1st-stage inter-UE control information (e.g., SCI)), and/or a second inter-UE control information (e.g., SCI) (2nd-stage inter-UE control information (e.g., SCI)), or vice versa. For example, a inter-UE control information (e.g., SCI) may be replaced/substituted with at least one of an inter-UE physical sidelink control channel (e.g., PSCCH), a first inter-UE control information (e.g., SCI), and/or a second inter-UE control information (e.g., SCI), or vice versa. For example, an inter-UE physical sidelink shared channel (e.g., PSSCH) may be replaced/substituted with a second inter-UE control information (e.g., SCI) and/or an inter-UE physical sidelink control channel (e.g., PSCCH), or vice versa

for example, if inter-UE control information (e.g., SCI) configuration fields are divided into two groups in consideration of a (relatively) high inter-UE control information (e.g., SCI) payload size, an inter-UE control information (e.g., SCI) including a first inter-UE control information (e.g., SCI) configuration field group may be referred to as a first inter-UE control information (e.g., SCI) or a 1st inter-UE control information (e.g., SCI), and an inter-UE control information (e.g., SCI) including a second inter-UE control information (e.g., SCI) configuration field group may be referred to as a second inter-UE control information (e.g., SCI) or a 2nd inter-UE control information (e.g., SCI). For example, the 1st inter-UE control information (e.g., SCI) and the 2nd inter-UE control information (e.g., SCI) may be transmitted through different channels. For example, the transmitting UE may transmit the first inter-UE control information (e.g., SCI) to the receiving UE through the inter-UE physical sidelink control channel (e.g., PSCCH). For example, the second inter-UE control information (e.g., SCI) may be transmitted to the receiving UE through an (independent) inter-UE physical sidelink control channel (e.g., PSCCH), or may be transmitted in a piggyback manner together with data through the inter-UE physical sidelink shared channel (e.g., PSSCH).

Meanwhile, in this specification, for example, "configuration" or "definition" may mean (pre)configuration from a base station or a network. For example, "configuration" or "define" may mean resource pool specific (pre)configuration from a base station or network. For example, a base station or a network may transmit information related to "configuration" or "definition" to a UE. For example, a base station or a network may transmit information related to "configuration" or "definition" to a UE through predefined signaling. For example, signaling to be pre-defined may include at least one of RRC signaling, MAC signaling, PHY signaling, and/or SIB.

Meanwhile, in this specification, for example, "configuration" or "definition" may mean designated or configured through signaling previously configured between UEs. For example, information related to "configuration" or "definition" may be transmitted/received through pre-configured signaling between UEs. For example, signaling to be pre-defined may be PC5 RRC signaling.

Meanwhile, in various embodiments of the present disclosure, for example, "radio link failure (e.g., RLF)" may be interpreted as mutually extended to at least one of out of synch (OOS) and in synch (IS).

Meanwhile, in various embodiments of the present disclosure, for example, a resource block (e.g., RB) may be replaced/substituted with a subcarrier, or vice versa. For example, a packet or a traffic may be replaced/substituted with a transport block (TB) or a medium access control protocol data unit (MAC PDU) according to a transmission layer, or vice versa. For example, a code block group (CBG) may be replaced/substituted with a TB, or vice versa. For example, a source ID may be replaced/substituted with a destination ID, or vice versa. For example, an L1 ID may be replaced/substituted with an L2 ID, or vice versa. For example, the L1 ID may be an L1 source ID or an L1 destination ID. For example, the L2 ID may be an L2 source ID or an L2 destination ID.

Meanwhile, in various embodiments of the present disclosure, for example, operation(s) of a TX UE to reserve/select/determine retransmission resource(s) may include operation(s) of the TX UE to reserve/select/determine potential retransmission resource(s) in which actual use is determined based on inter-UE feedback (e.g., SL HARQ feedback) information received from RX UE(s).

Meanwhile, in various embodiments of the present disclosure, a sub-selection window may be replaced/substituted with a selection window and/or a pre-configured number of resource sets within the selection window, or vice versa.

Meanwhile, in various embodiments of the present disclosure, SL MODE 1 may refer to a resource allocation method or a communication method in which a base station directly schedules SL transmission resource(s) for a TX UE through pre-defined signaling (e.g., base station-to-UE control information (e.g., DCI) or RRC message). For example, SL MODE 2 may refer to a resource allocation method or a communication method in which a UE independently selects inter-UE transmission (e.g., SL transmission) resource(s) in a resource pool pre-configured or configured from a base station or a network. For example, a UE performing inter-UE communication (e.g., SL communication) based on SL MODE 1 may be referred to as a MODE 1 UE or MODE 1 TX UE, and a UE performing inter-UE communication (e.g., SL communication) based on SL MODE 2 may be referred to as a MODE 2 UE or MODE 2 TX UE.

Meanwhile, in the present specification, for example, a dynamic grant (DG) may be replaced/substituted with a configured grant (CG) and/or a semi-persistent scheduling grant (SPS). For example, a DG may be replaced/substituted with a combination of a CG and a SPS grant. For example, a CG may include at least one of CG type 1 (configured grant type 1) and/or CG type 2 (configured grant type 2). For example, in CG type 1, a grant may be provided by RRC signaling and may be stored as a configured grant. For example, in CG type 2, a grant may be provided by a PDCCH, and may be stored or deleted as a grant configured based on L1 signaling indicating activation or deactivation of the grant. For example, in CG type 1, a base station may allocate a periodic resource to a transmitting UE through an RRC message. For example, in CG type 2, a base station may allocate a periodic resource to a transmitting UE through an RRC message, the base station may dynamically activate or deactivate the periodic resource through base station-to-UE control information (e.g., DCI).

Meanwhile, in various embodiments of the present disclosure, a channel may be replaced/substituted with a signal, or vice versa. For example, transmission/reception of a channel may include transmission/reception of a signal. For example, transmission/reception of a signal may include transmission/reception of a channel. For example, cast may be replaced/substituted with at least one of unicast, groupcast, and/or broadcast, or vice versa. For example, a cast type may be replaced/substituted with at least one of unicast, groupcast, and/or broadcast, or vice versa. For example, a cast or a cast type may include unicast, groupcast, and/or broadcast.

Meanwhile, in various embodiments of the present disclosure, a resource may be replaced/substituted with a slot or a symbol, or vice versa. For example, the resource may include a slot and/or a symbol.

Meanwhile, in various embodiments of the present disclosure, a priority may be replaced/substituted with at least one of logical channel prioritization (LCP), latency, reliability, minimum required communication range, prose per-packet priority (PPPP), sidelink radio bearer (SLRB), a QoS profile, a QoS parameter, and/or requirement, or vice versa.

Meanwhile, in various embodiments of the present disclosure, for example, for convenience of description, a (physical) channel used when a RX UE transmits at least one of the following information to a TX UE may be referred to as a PSFCH.

- inter-UE feedback (e.g., SL HARQ feedback), inter-UE channel state information (e.g., SL CSI), inter-UE (L1) reference signal received power (e.g., SL (L1) RSRP)

Meanwhile, when performing sidelink communication, a method for a transmitting UE to reserve or pre-determine transmission resource(s) for receiving UE(s) may be representatively as follows.

For example, the transmitting UE may perform a reservation of transmission resource(s) based on a chain. Specifically, for example, if the transmitting UE reserves K transmission resources, the transmitting UE may transmit location information for less than K transmission resources to receiving UE(s) through a inter-UE control information (e.g., SCI) transmitted to the receiving UE(s) at any (or specific) transmission time or a time resource. That is, for example, the inter-UE control information (e.g., SCI) may include location information for less than the K transmission resources. Alternatively, for example, if the transmitting UE reserves K transmission resources related to a specific TB, the transmitting UE may transmit location information for less than K transmission resources to receiving UE(s) through a inter-UE control information (e.g., SCI) transmitted to the receiving UE(s) at any (or specific) transmission time or a time resource. That is, the inter-UE control information (e.g., SCI) may include location information for less than the K transmission resources. In this case, for example, it is possible to prevent performance degradation due to an excessive increase in payloads of the inter-UE control information (e.g., SCI), by signaling only the location information for less than K transmission resources to the receiving UE(s) through one inter-UE control information (e.g., SCI) transmitted at any (or specific) transmission time or the time resource by the transmitting UE.

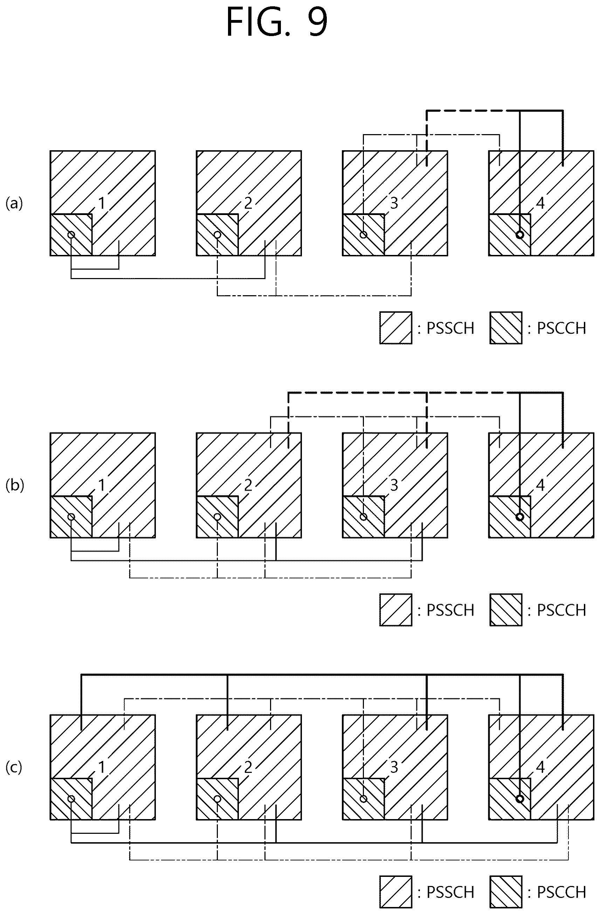

FIG. 9 shows a method in which a UE that has reserved transmission resource(s) informs another UE of the transmission resource(s), based on an embodiment of the present disclosure. The embodiment of FIG. 9 may be combined with various embodiments of the present disclosure.

Specifically, for example, (a) of FIG. 9 shows a method for performing by a transmitting UE chain-based resource reservation by transmitting/signaling location information of (maximum) 2 transmission resources to receiving UE(s) through one inter-UE control information (e.g., SCI), in the case of a value of K = 4. For example, (b) of FIG. 9 shows a method for performing by a transmitting UE chain-based resource reservation by transmitting/signaling location information of (maximum) 3 transmission resources to receiving UE(s) through one inter-UE control information (e.g., SCI), in the case of a value of K = 4. For example, referring to (a) and (b) of FIG. 9, the transmitting UE may transmit/signal only location information of the fourth transmission-related resource to the receiving UE(s) through the fourth (or last) transmission-related inter-UE physical sidelink control channel (e.g., PSCCH). For example, referring to (a) of FIG. 9, the transmitting UE may transmit/signal to the receiving UE(s) not only location information of the fourth transmission-related resource but also location information of the third transmission-related resource additionally through the fourth (or last) transmission-related inter-UE physical sidelink control channel (e.g., PSCCH). For example, referring to (b) of FIG. 9, the transmitting UE may transmit/signal to the receiving UE(s) not only location information of the fourth transmission-related resource but also location information of the second transmission-related resource and location information of the third transmission-related resource additionally through the fourth (or last) transmission-related inter-UE physical sidelink control channel (e.g., PSCCH). In this case, for example, in (a) and (b) of FIG. 9, if the transmitting UE may transmit/signal to the receiving UE(s) only location information of the fourth transmission-related resource through the fourth (or last) transmission-related inter-UE physical sidelink control channel (e.g., PSCCH), the transmitting UE may configure or designate a field/bit of location information of unused or remaining transmission resource(s) to a pre-configured value (e.g., 0). For example, in (a) and (b) of FIG. 9, if the transmitting UE may transmit/signal to the receiving UE(s) only location information of the fourth transmission-related resource through the fourth (or last) transmission-related inter-UE physical sidelink control channel (e.g., PSCCH), the transmitting UE may be configured or designate a field/bit of location information of unused or remaining transmission resource(s) to a pre-configured status/bit value indicating/representing the last transmission (among 4 transmissions).

Meanwhile, for example, the transmitting UE may perform a reservation of transmission resource(s) based on a block. Specifically, for example, if the transmitting UE reserves K transmission resources, the transmitting UE may transmit location information for K transmission resources to receiving UE(s) through a inter-UE control information (e.g., SCI) transmitted to the receiving UE(s) at any (or specific) transmission time or a time resource. That is, the inter-UE control information (e.g., SCI) may include location information for K transmission resources. For example, if the transmitting UE reserves K transmission resources related to a specific TB, the transmitting UE may transmit location information for K transmission resources to receiving UE(s) through a inter-UE control information (e.g., SCI) transmitted to the receiving UE(s) at any (or specific) transmission time or a time resource. That is, the inter-UE control information (e.g., SCI) may include location information for K transmission resources. For example, (c) of FIG. 9 shows a method for performing by the transmitting UE block-based resource reservation, by signaling location information of 4 transmission resources to receiving UE(s) through one inter-UE control information (e.g., SCI), in the case of a value of K = 4.

According to one embodiment of the present disclosure, in a communication operation environment between a base station and a UE (and/or between UEs), a lower layer of a UE (e.g., an access stratum (AS) inter-UE transmission (e.g., an SL transmission)) may be provided with (prediction of) (change amount of) mobility information (e.g., obtained via sensors, messages received from a base station/other UEs, etc.) (e.g., absolute/relative position, speed/velocity, acceleration, movement direction/path, roll/pitch/YAW, rotation), (prediction of) (change amount for) (aircraft) shake information (e.g., turbulence, orientation change (related to an antenna or the proceeding direction), impact amount, etc.), (prediction of) (change amount for) antenna change information (e.g., antenna configuration change/switching (used in communication)), (prediction of) (change amount for) blockage presence (for LOS path) information, or information of a predefined form/format derived/determined based on such information, from its higher layer (e.g., application layer).

Further, for example, a lower layer of a UE may use at least one of the above informations, or a combination of such information (as input/assistance parameters to an artificial intelligence (AI)/machine learning (ML) model), to improve the quality of the wireless communication (e.g., (estimated) channel state information (e.g., CSI) and/or accuracy, reliability, predictability, or latency, etc. (related to a selected beam)).

For example, when performing AI/ML-based communication in such a form, (some or all) of the rules below may be configured to be applied. Further, for example, although this disclosure assumes a situation where an application layer provides the information described above to an AS layer for ease of description of the proposed rules/methods, it will be apparent that the proposed rules/methods are not limited to this and can be extended to situations where information is exchanged between various layers.

According to one embodiment of the present disclosure, an application layer may provide an AS layer with uncertainty information in a predefined form/format (as an input/assistance parameter of an AI/ML model). Here, for example, uncertainty information may be defined according to the following criteria/scheme.

Alternatively, for example, instead of an application layer providing an AS layer with uncertainty information in this form/format (e.g., it may be interpreted as some sort of processed information), but rather, the application layer may deliver (directly or in a form/format with only some level of processing) (prediction of) (change amount for) mobility information, (prediction of) (change amount for) (airframe) shake information, (prediction of) antenna change information, and/or (prediction of) (change of) blockage presence (for LOS path) (which are described above) to the AS layer, and the AS layer, which receives it, may derive uncertainty information/levels.

For example, if mobility information (and/or, shake information, antenna change information, and/or blockage presence information) (as described above) related change amount (e.g., roll/pitch/YAW change amount, impact change amount, movement direction/position change amount, (transmission/reception) beam boresight direction change amount, (acceleration) speed change amount, etc.) changes significantly above a predetermined threshold level (and/or a significant change is predicted) (compared to a reference/representative measurement value (e.g., an average, minimum value, maximum value, variance/standard deviation) within a prior time window configured in the past from the current time point, or compared to a measurement value of the current time point) the uncertainty information may be set to a (relatively) high level/level. Here, for example, it may be configured so that the larger the amount of change relative to the threshold level, the larger the uncertainty degree/level is relatively (i.e., the amount of change relative to the threshold level and the uncertainty level value are proportional), or the uncertainty degree/level may be a pre-configured value when the amount of change relative to the threshold level is large.

For example, if predictability (and/or, prediction accuracy/confidence level) for (change amount of) mobility information (and/or, shake information, antenna change information, and/or, blockage presence information) (described above) decreases to be less than or equal to a pre-configured threshold level (and/or, deviation/variance of the predicted value and/or, error range of the predicted value increases to be greater than or equal to a threshold level), the uncertainty information may be set to be a higher degree/level.

Alternatively, for example, something related thereto may be defined as a separate parameter/format (e.g., prediction confidence level information, or expected error level/range information) and provided by an application layer to an AS layer (as an input/assistance parameter to an AI/ML model). Here, for example, a situation/case where the uncertainty degree/level increases may be interpreted as corresponding to a situation/case where the prediction confidence level decreases (and/or a situation/case where the expected error level/range increases).

According to one embodiment of the present disclosure, when the uncertainty information (described above) is configured to a high level (and/or when the prediction confidence level information is configured to a low level, and/or when the estimated error level/range is configured to a high level), an AS layer may configure a channel state information (e.g., CSI) (e.g., channel quality indicator (e.g., CQI), PMI, RI, signal-to-noise ratio (e.g., SINR)) values (and/or (beam (reference signal (e.g., RS)) related) reference signal received power (e.g., RSRP) (and/or reference signal received quality (e.g.,

RSRQ) and/or signal-to-noise ratio (e.g., SINR) and/or reference signal strength indicator (e.g., RSSI)) information value) conservatively.

For example, an operation of an AS layer to conservatively configure channel state information (e.g., CSI) (to be reported to a base station or other UE) may be performed in the form of deriving/reporting a (relatively) low value (lower than a pre-configured threshold level/value or lower than a level/value actually measured/derived (at this time point)), reporting a value of a pre-configured value/index (indicating such a situation) (e.g., a channel quality indicator (e.g., CQI) index of OUT-OF-RANGE), applying a channel state information (e.g., SCI) margin value relatively largely (or smally), and/or configuring such that the interference level related to the corresponding time region is not included in an input (sample) value of the interference level (and/or the desired signal quality) averaging operation (on a time region) related to generation of channel state information (e.g., CSI) (and/or, an input (sample) value of an L3 FILTER related to generation of reference signal received power (e.g., RSRP) information).

And/or, for example, when the uncertainty information (described above) is configured to a high level (and/or, when the prediction confidence level information is configured to a low level, and/or, when the expected error level/range is configured to a high level), an AS layer may configure the (3DB) beam width (and/or beam shape) to be relatively wide.

And/or, for example, when the uncertainty information (described above) is configured to a high level (and/or, the prediction confidence level information is configured to a low level, and/or, the estimated error level/range is configured to a high level), an AS layer may select/use a beam with a (relatively wide) (3DB) beam width (and/or beam shape and/or beam reference signal) (that has been pre-configured for this purpose).

And/or, for example, if the uncertainty information (described above) is configured to a high level (and/or the prediction confidence level information is configured to a low level, and/or the estimated error level/range is configured to a high level), an AS layer may perform a beam pairing/recovery procedure (and/or a beam refinement procedure).

And/or, for example, if the uncertainty information (described above) is configured to a high level (and/or the prediction confidence level information is configured to a low level, and/or the estimated error level/range is configured to a high level), an AS layer may configure a (relatively) lower (or higher) transmit power value (than a pre-configured threshold level).

And/or, for example, if the uncertainty information (as described above) is configured to a high level (and/or the prediction confidence level information is configured to a low level, and/or the expected error level/range is configured to a high level), reselection of a sidelink resource may be configured to be triggered (under circumstances where direct communication between UEs is performed).

And/or, for example, when the uncertainty information (described above) is configured to a high level (and/or when the prediction confidence level information is configured to a low level, and/or when the expected error level/range is configured to a high level), a transmission of a sidelink channel state information (e.g., CSI) measurement value (and/or reference signal received power (e.g., RSRP) (and/or reference signal received quality (e.g., RSRQ) and/or signal-to-noise ratio (e.g., SINR) and/or reference signal strength indicator (e.g., RSSI)) measurement value) may be configured to be triggered.

And/or, for example, when the uncertainty information (described above) is configured to a high level (and/or when the prediction confidence level information is configured to a low level, and/or when the expected error level/range is configured to a high level), it may be configured so that an RLF declaration is performed and/or a release of a sidelink session is performed.

And/or, for example, when the uncertainty information (described above) is configured to a high level (and/or when the prediction confidence level information is configured to a low level, and/or when the expected error level/range is configured to a high level), a counting operation of DTX number (used in determination of whether to declare a sidelink RLF) (for a pre-configured timer/time) (for a linked packet transmission) may be configured not to be performed.

And/or, for example, when the uncertainty information (described above) is configured to a high level (and/or when the prediction confidence level information is configured to a low level, and/or when the expected error level/range is configured to a high level), a UE may be configured to stop a packet (e.g., MAC PDU) transmission (in progress) (and/or reception) operation (for a pre-configured timer/time).

And/or, for example, when the uncertainty information (described above) is configured to a high level (and/or when the prediction confidence level information is configured to a low level, and/or when the expected error level/range is configured to a high level), a UE may be configured to report a HARQ feedback as NACK information (and/or a pre-configured specific value/information (representing such a situation)).

And/or, for example, when the uncertainty information (described above) is configured to a high level (and/or when the prediction confidence level information is configured to a low level, and/or when the expected error level/range is configured to a high level), a UE may be configured to transmit a message/indicator informing such a state through a predefined signaling (to a base station or another UE).

Here, for example, a network may configure the adjusting (allowed) range (and/or, application offset value range) of the above-described parameters (e.g., channel state information (e.g., CSI) value, a (beam (RS)-related) reference signal received power (e.g., RSRP) (and/or, reference signal received quality (e.g., RSRQ), signal-to-noise ratio (e.g.,

SINR), and/or, reference signal strength indicator (e.g., RSSI)) information value, (3DB) beam width (and/or beam shape), transmit power value, etc.) per uncertainty degree/level (ang/or prediction confidence level and/or expected error level/range) (through a predefined signaling).

Here, for example, the corresponding adjusting (allowed) range (and/or application offset value range) may be differently configured according to service type (and/or the priority) and/or (target) service quality (e.g., QoS) requirement (e.g., reliability, latency, error rate), etc.

For example, (the above described) (prediction of) (change amount for) mobility information, (prediction of) (change amount for) (aircraft) shake information, (prediction of) antenna change information, and/or (prediction of) (change amount for) blockage (for an LOS path) presence information, or a (pre-configured) part of information among them, or the uncertainty degree/level (and/or, prediction confidence level, and/or expected error level/range) information may be configured to be signaled to a base station (or, another UE), also, the base station (or, another UE) that received it may use it as an input/assistance parameter of its own AI/ML model.

Here, for example, a UE may report information for what information it is provided from an application layer to a base station (or another UE), and the base station (or another UE) which received it may indicate which to report among them in what format/form.

Here, for example, a UE may report information for what information it is provided from an application layer to a base station (or another UE), and the base station (or another UE) which received it may indicate which to report among them in what scheme (e.g., reporting period/offset).

Here, for example, a UE may report to a base station (or other UE) information for what information it is receiving from an application layer, and the base station (or other UE) receiving the information may indicate which to report among them and according to what condition. For example, the condition may include a case where the information change amount has become greater (equal to or above a pre-configured threshold level), a case where the uncertainty degree/level has become greater (or less) (equal to or above a pre-configured threshold level) (and/or, a case where the prediction confidence level has become less (or greater) (equal to or below a pre-configured threshold level), and/or a case where the expected error level/range has become greater (equal to or above a pre-configured threshold level)).

According to one embodiment of the present disclosure, the information format/form used by an AI/ML model at an AS layer and the information format/form which can be provided (and/or available) at an application layer may be different. For example, an AI/ML model at an AS layer uses location change amount information from a location at a previous time point, whereas an application layer may generate/provide (absolute) location information in the form of latitude/longitude/altitude. Thus, for example, a pre-configured entity (or layer) (e.g., a NAS) may play a role in converting (absolute) location information in the form of latitude/longitude/altitude (generated/provided by an application layer) into location change amount information from a location at a previous time point (which can be used by an AI/ML model in an AS layer).

Here, for example, when additional information such as instantaneous velocity/acceleration is provided (at an application layer), the entity may reflect it when deriving the location change amount information from the location at the previous time point, or the information such as instantaneous velocity/acceleration may be passed to an AS layer separately from the location change amount information from the previous time point, and an AI/ML model at an AS layer may reflect/process it (in deriving the final location change amount information).

For example, among various information available at an application layer, those that are used/referenced in generating information (related to an input/assistance parameter of an AI/ML model) provided to an AS layer (e.g., mobility information (as described above), shake information, antenna change information, and/or blockage presence information) may be defined as follows. Here, for example, the mobility information of mobility below may be interpreted (expanded or identical) to the mobility information (and/or, shake information, antenna change information, and/or blockage presence information) described above.

Recently, Intelligent Transport System (ITS) has expanded from traditional transportation means (trains, cars, etc.) to address extended mobility such as drones and mobile robots. Connectivity between mobilities and between infrastructure may be a very important topic in ITS, and many developments are being made to improve the communication performance of connected mobility.

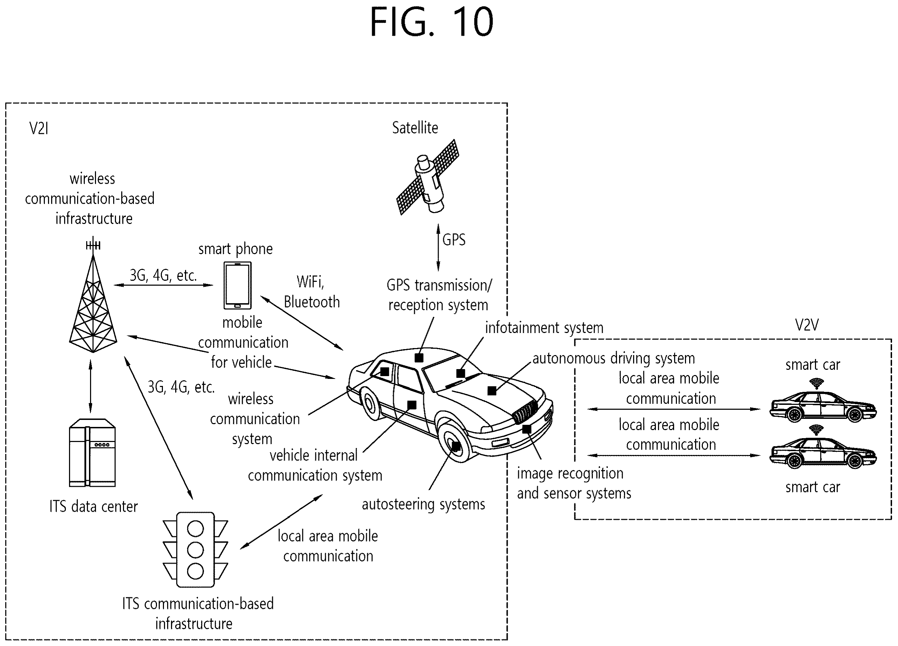

FIG. 10 shows a smart vehicle with an internal communication system and an external communication system, according to one embodiment of the present disclosure. The embodiment of FIG. 10 may be combined with various embodiments of the present disclosure.

Here, by the internal communication system and the external communication system of a mobility being mixed with each other, and data or information being exchanged between them, safety and traffic efficiency can be improved from an ITS perspective. For example, referring to a vehicle in FIG. 10, in the internal communication system of the vehicle itself, communication between the electronic control system and sensors that collect information about the internal operating status of the vehicle, the movement of the vehicle body, and the surrounding environment may be performed, and in the external communication system of the vehicle, communication with the communication infrastructure and other mobility may be performed.

As internal communication systems for mobility, there are various systems due to proprietary developments by manufacturers and component suppliers. Internal communication systems in mobility may include, for example, MOST, LIN, and CAN, as well as the more advanced CAN FD, FlexRay, etc.

As external communication systems for mobility, there are direct communication (e.g., DSRC, 3GPP PC5) and mobile communication (e.g., LTE, NR). In order to improve communication performance according to the above external communication systems, technology development is being performed by standard organizations such as IEEE and 3GPP. Recently, AI model-based communication performance improvement methods have been discussed. That is, development is being carried out with the aim of enhancing channel state information (e.g., CSI) feedback, beam management, and positioning accuracy improvement using a trained AI model.

Research in training an AI model using information inside a communication module or information exchanged between base stations (e.g., past channel state information (e.g., CSI) or location information) is being carried out. However, in mobility, there may be challenges in channel state information (e.g., CSI) management, beam management, and accurate positioning due to a feature that various movements are possible in 3D space and uncertainty about the mobility/movement of a body.

For example, in a vehicle, rolling may occur as the vehicle travels over an uneven road surface, and pitching may occur due to sudden stops or hard launches. Or, for example, a drone may encounter turbulence in flight that prevents it from flying smoothly. In any of the above examples, a situation in which channel state information (e.g., CSI) and beam management cannot be performed smoothly at a communication module mounted on the fuselage due to unpredictable fuselage motion may occur. For example, a sudden rotation of a fuselage may degrade the performance of a communication module and antenna performing beamforming.

In this disclosure, a method for extracting and delivering movement information of a mobility to a communication module when the mobility performs communication with an external entity (e.g., a base station or RSU, an ITS UE) is proposed. The delivered movement information of the mobility may be utilized as an input to an artificial intelligent (AI) model mounted in a communication module, thereby causing an improvement in communication performance (e.g., channel state information (e.g., CSI) prediction, beam prediction, positioning accuracy). In addition, in the present disclosure, when information is delivered from an electronic device (e.g., gateway, motion control unit) to a communication UE in an internal network of a mobility, or from an application layer to an access layer (e.g., AS layer) within the communication UE, the format of the delivered information is proposed. For example, in the present disclosure, mobility information, movement information, and the like may be interchangeable/substituted.

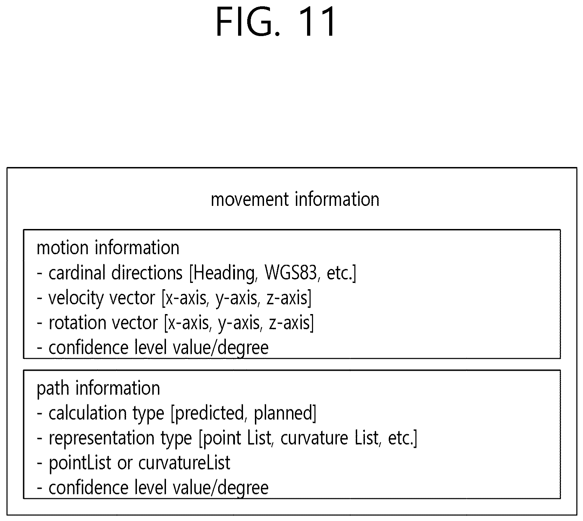

FIG. 11 shows the format of movement information exchanged when movement information is exchanged, according to one embodiment of the present disclosure. The embodiment of FIG. 11 may be combined with various embodiments of the present disclosure.

Referring to FIG. 11, data that may represent movement information of a mobility, that may be used in an AI model of a communication module among information exchanged on the internal network of the mobility, may be extracted. The mobility information of the mobility, as defined herein, may include 1) the current motion information of the mobility (e.g., 3-axes velocity, 3-axes rotation) and 2) the predicted and/or planned path of the mobility.

For example, motion information of a mobility may include linear motion vectors in three axis and rotational motion vectors in three axis that are calculated from measurement values of sensors mounted inside the mobility (e.g., GNSS sensors, inertial measurement units (IMUs), acceleration sensors, gyroscopic sensors, geomagnetic sensors, gravity sensors, or rotational vector sensors).

For example, an expected path or planned path of a mobility may refer to a predicted path calculated for the future travel of the mobility based on its current location, speed, direction, input values from the driver or pilot, and the like, or to path information that is pre-planned, considering movement to a destination and obstacle avoidance. If, for example, communication is performed between mobilities or between infrastructures, including V2X in a communication module, and the predicted or planned path is exchanged, this information may be used instead. For example, in the SAE standard for V2X, if a mobility transmits a Basic Safety Message (BSM), the DE_PathPrediction value configured in the message may be utilized.

For example, the motion information may include a speed vector in the x, y, and z axes and a rotation vector in the x, y, and z axes, in this case, on the basis of the cardinal directions of x, y, and z, a Heading value and/or WGS84, which is the proceeding direction of the mobility, may be determined.

For example, the x-axis might be defined as the heading direction of a mobility, the axis perpendicular to the x-axis in a plane perpendicular to the direction of gravity might be defined as the y-axis, and the direction of gravity might be defined as the z-axis.

If WGS84 is used as the reference, velocity vectors and rotation vectors may be expressed with the origin at the Earth's center of mass, the X-axis in the direction of the intersection of the Greenwich meridian with the equator, the Y-axis in the direction of 90 degrees east longitude, and the Z-axis in the direction of the North Pole. The elements of velocity and rotation vectors may be expressed as absolute values and/or relative values and/or change potential [%].

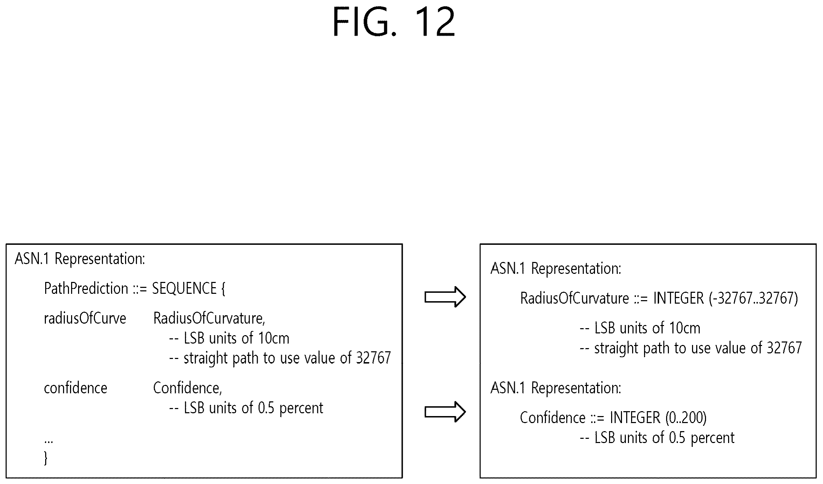

FIG. 12 shows utilization of path prediction data elements of a BSM, according to one embodiment of the present disclosure. The embodiment of FIG. 12 may be combined with various embodiments of the present disclosure.

Referring to FIG. 12, path information may include a predicted path or a planned path calculated internally. The representation of the path may be a list of position points or a list of radii of curvature, as representative, but may also be represented in other ways. In a communication UE exchanging a BSM, it may be represented as shown in FIG. 12. For example, the PathPrediction data element of BSM may consist of a list of radii of curvature.

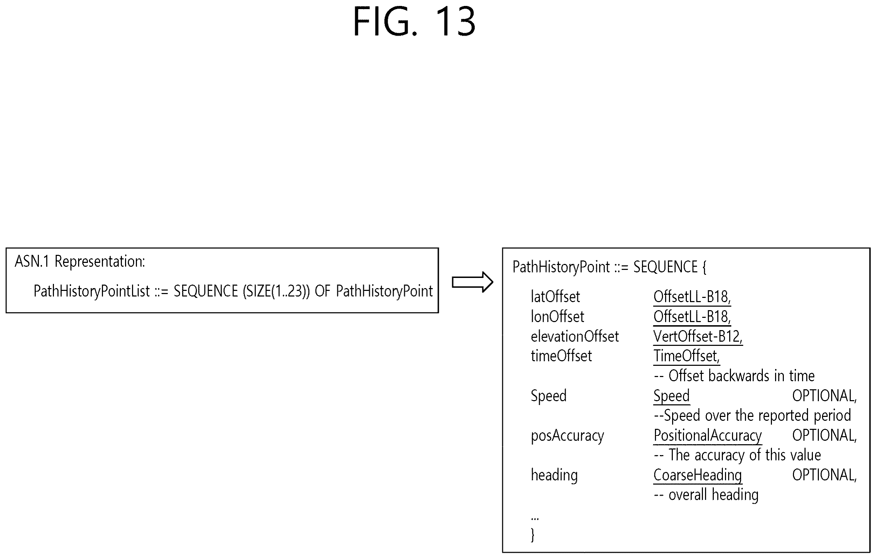

FIG. 13 shows a path represented by a list of points, according to one embodiment of the present disclosure. The embodiment of FIG. 13 may be combined with various embodiments of the present disclosure.

Referring to Figure 13, a path is represented as a list of points.

For example, a confidence value and/or a confidence level value, which are commonly included in both schemes for path information, may represent information such as certainty or estimated error.

According to one embodiment of the present disclosure, an AI model may be located at an application layer or access layer (e.g., AS layer) of a communication module.

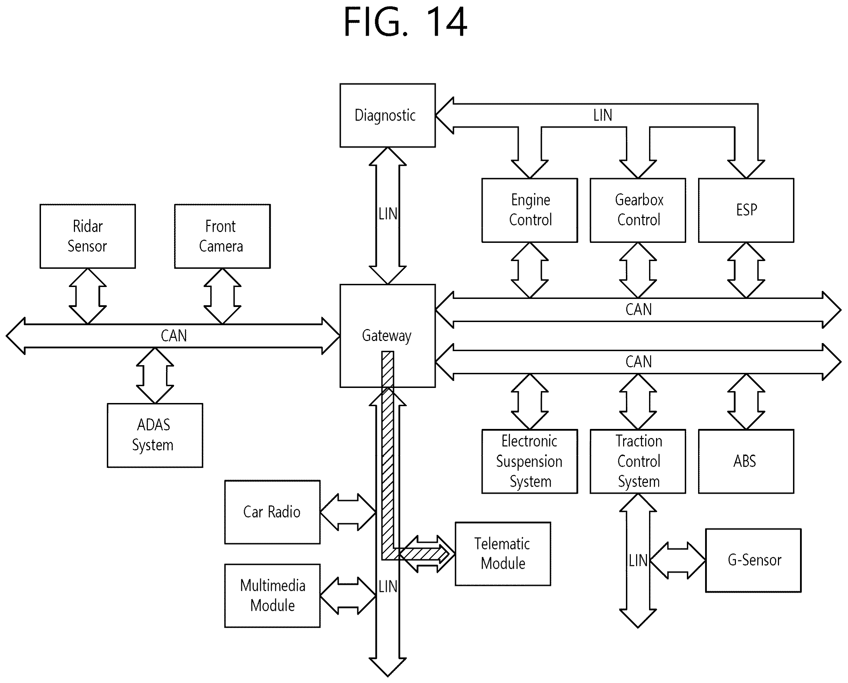

FIG. 14 shows a delivering route of information through a gateway, according to one embodiment of the present disclosure. The embodiment of FIG. 14 may be combined with various embodiments of the present disclosure.

Referring to FIG. 14, information may be delivered from other electronic devices through a Gateway to a Telematic Module. If an AI model is located at an application layer in a Telematic Module, the movement information derived above may be delivered to the Telematic Module from the mobility internal network.

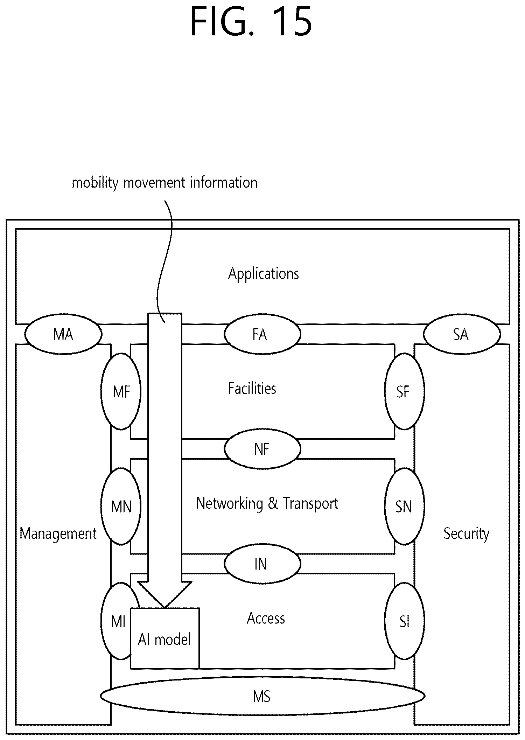

FIG. 15 shows a delivering route for movement information when an AI model is located at an application layer of a communication module, according to one embodiment of the present disclosure. The embodiment of FIG. 15 may be combined with various embodiments of the present disclosure.

Referring to FIG. 15, if an AI model is located in an access layer (e.g., AS layer) of a communication module, an application layer of the communication module may calculate mobility movement information after collecting each sensor information, and the mobility movement information may be delivered to an access layer (e.g., AS layer) in the communication module. Further, the mobility movement information may be used as an input parameter of an AI model of a base station in a communication between base stations.

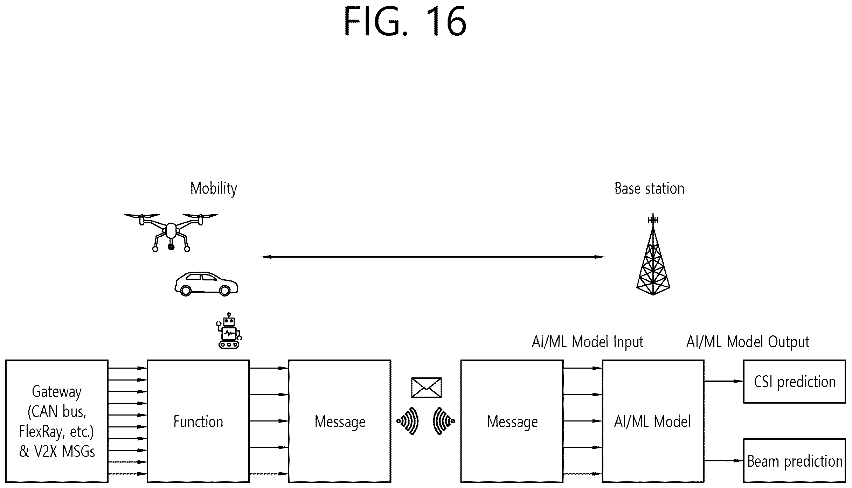

FIG. 16 shows an exchange of movement information between a mobility and a base station, according to one embodiment of the present disclosure. The embodiment of FIG. 16 may be combined with various embodiments of the present disclosure.

Referring to FIG. 16, a situation in which movement information of a mobility is being provided from an internal network to a communication module may be reported to a base station, and the base station may request or indicate to the mobility the manner/condition of delivering the movement information of the mobility that is being exchanged to the base station. For example, a mobility may transmit its movement information to a base station in response to a request or indication from the base station.

For example, movement information of a mobility delivered to a communication module may be utilized as an input parameter to an AI model, which may result in communication with the outside with improved communication performance (e.g., beam prediction or channel state information (e.g., CSI) prediction). For example, if there are interactions (e.g., reports, requests, responses) between multiple base stations, the movement information of a mobility can be utilized as input parameters for an AI model within a base station.

According to one embodiment of the present disclosure, there may be a need for a standardized means for providing situational awareness information from an application to an access layer (e.g., an AS layer) in a vehicle.

For example, communication performance may be improved if situational awareness information, including the location, speed, and orientation of a UE, is used by an AI/ML module.

For example, an application layer in a vehicle may provide situational awareness information for various purposes. For example, the situational awareness information may include: ITS messages including predictive information about the future, not just the current state of a vehicle, such as BSM/CAM, etc. and on-board diagnostics including information such as speed, (deceleration)acceleration, steering angle, etc. that can be retrieved by a connector; etc.

For example, if an AI/ML module in an access layer (in a UE) utilizes situational awareness information provided by an application in the vehicle, significant improvements in communication performance may be possible. For example, since situational awareness information is consumed inside the vehicle, there may be no security or privacy issues.

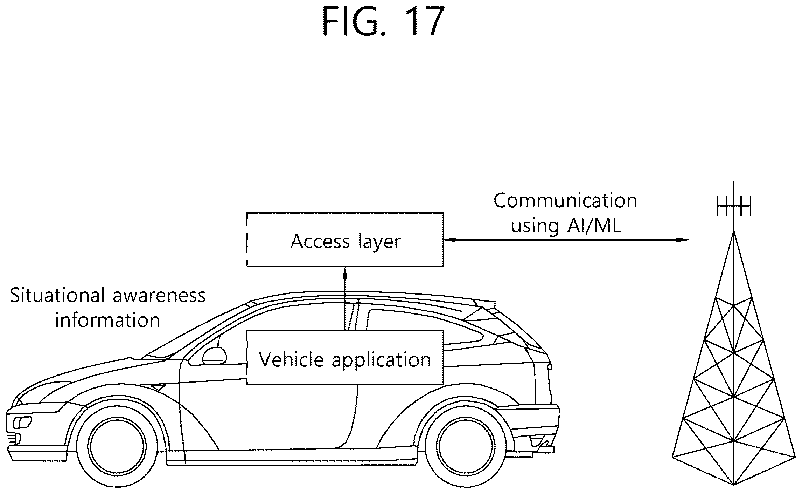

FIG. 17 shows communication using AI/ML performed between a vehicle and a base station, according to one embodiment of the present disclosure. The embodiment of FIG. 17 may be combined with various embodiments of the present disclosure.

Referring to FIG. 17, a vehicle may include an application layer and an access layer. Here, the application layer may deliver situational awareness information to the access layer. The vehicle may perform wireless communication with a base station, and an AI/ML module may be used for the wireless communication.

While it may be possible to deliver situational awareness information in a standalone manner, this approach may not be efficient.

For example, from the perspective of an application layer in a vehicle, the set or format of required information may be changed according to the vendor of the access layer, resulting in the application layer having to prepare multiple options for delivering situational awareness information and losing the possibility of reusing existing information.

For example, in the perspective of an AI/ML module at an access layer in a vehicle, different vehicle models can provide situational awareness information in different formats, which may make it difficult to design an AI/ML solution that may be applied to various cases.

For example, as a requirement in a vehicle related to an AI/ML module, it may be necessary for a standardized means for an application layer of a vehicle to be provided to provide situational awareness information to an access layer of the same vehicle.

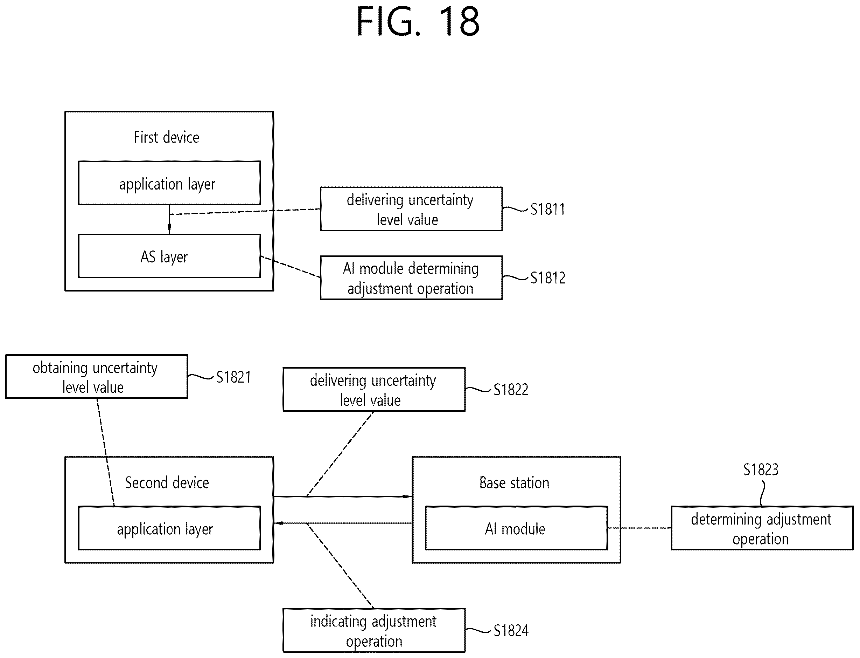

FIG. 18 shows a procedure for determining a coordination operation of a wireless communication by an AI module, according to one embodiment of the present disclosure. The embodiment of FIG. 18 may be combined with various embodiments of the present disclosure.

Referring to FIG. 18, a first device wherein an AS layer included in the first device includes an AI module and a second device in which no AI module is mounted internally are shown.

In step S1811, an application layer in a first device may deliver an uncertainty level value to an AS layer. For example, the uncertainty level value may be information extracted by the application layer from sensor information or the like.

In step S1812, an AI module in an AS layer in the first device may determine an adjustment operation for the communication performed by the first device based on the uncertainty level value as an input.

For example, the adjustment operation may include any of the operations of a UE described in various embodiments of the present disclosure. For example, the adjusting operation may include: determining whether to use a time interval related to the uncertainty level value as a data source for determining channel state information. Alternatively, for example, the adjusting operation may include: operations such as transmitting a HARQ NACK, stopping a transmission of the HARQ NACK, and stopping an on-going transmission of a packet, an RLF declaration, etc.

In step S1821, an application layer of the second device may obtain uncertainty level values via sensor information or the like.

In step S 1822, the second device may deliver the uncertainty level value to a base station including an AI module.

In step S1823, the AI module may determine an adjustment operation for the wireless communication performed by the second device, using the uncertainty level value as an input.

For example, the adjustment operation may include any of the operations of a UE described in various embodiments of the present disclosure. For example, the adjusting operation may include: determining whether to use a time interval related to the uncertainty level value as a data source for determining channel state information. Alternatively, for example, the adjusting operation may include: transmitting a HARQ NACK, stopping transmission of a packet being transmitted, declaring an RLF, or the like.

In step S1824, the base station may indicate the determined adjustment operation to the second device.

For example, various schemes described in the present disclosure may be applied differently per unicast session (group), per cast type, per transmission priority value, per priority value, per inter-UE (e.g., SL) transmission with inter-UE (e.g., SL) HARQ-ACK feedback enabled/disabled, per inter-UE (e.g., SL) HARQ-ACK feedback option, per QoS parameter, per (remaining) PDB, per congestion control level, per mobility-related information of a UE (e.g., velocity, speed, direction, acceleration, position, height, etc.) per (transmission and/or reception) resource pool, per inter-UE transmission or reception, per HARQ process, per beam process, per source ID, per destination ID, and/or per transmission block (e.g., TB).

For example, in various embodiments of the present disclosure, the unit of (pre-)configuration may be configured in the form of different combinations of the above. For example, in various embodiments of the present disclosure, the indication and management of parameters through an inter-UE physical control channel (e.g., PSCCH) and/or an inter-UE physical shared channel (e.g., PSSCH) may be performed as the unit in the form of different combinations of the above.

In various embodiments of the present disclosure, spatial setting and/or transmission configuration information (e.g., TCI) and/or QCL information, etc. may refer to each other and/or be substituted and interpreted as beam-related information, beam direction, spatial domain transmission or reception filter, etc.

In various embodiments of the present disclosure, the spatial setting information for a transmission being the same may mean that spatial domain transmission filters of a UE are the same for the two different transmission signals.

In various embodiments of the present disclosure, the spatial setting information for the reception being the same may mean that the two different received signals are in a QCL "TYPE D' relationship and/or it is a relationship where the same spatial reception parameters are used.

The various schemes of the present disclosure may be applied differently per inter-UE channel (e.g., SL channel). The various schemes of the present disclosure may be applied differently according to the type of information included in an inter-UE channel (e.g., SL channel).

For example, whether to apply the above rule (and/or a proposed scheme/rule-related parameter value of the present disclosure) may be configured/allowed (and/or appliance of the above rule may be limitedly configured/allowed) specifically for at least one among elements/parameters of a service type (and/or the (LCH or service) priority, QoS requirement (e.g., latency, reliability, the minimum communication range), a PQI parameter) (and/or (a transmission of) an LCH/MAC PDU with a HQR feedback enabled (and/or disabled), a CBR measurement value of a resource pool, an SL cast type (e.g., unicast, groupcast, broadcast), an SL groupcast HARQ feedback option (e.g., NACK only feedback, ACK/NACK feedback, TX-RX distance based NACK only feedback), SL MODE 1 CG type (e.g., SL CH type 1/2), an SL mode type (e.g., mode 1/2), a resource pool, whether it is a resource pool in which a PSFCH resource is configured, a case where a periodic resource reservation operation (and/or an aperiodic resource reservation operation) is allowed/-configured (or, not allowed/configured) on a resource pool, a case where a partial sensing operation (and/or a random resource selection operation (and/or a full sensing operation)) is allowed/configured on a resource pool (or not allowed/configured), a source (L2) ID (and/or a destination (L2) ID), a PC5 RRC connection link, an SL link, a connection status (with a base station) (e.g., RRC CONNECTED status, IDLE status, INACTIVE status), an SL HARQ process (ID), whether an SL DRX operation is performed (by a transmitting UE or a receiving UE), whether it is a power saving (transmitting or receiving) UE, a case where a PSFCH transmission and a PSFCH RX (and/or a plurality of PSFCH transmissions (exceeding the UE capability)) overlap (and/or a PSFCH transmission (and/or a PSFCH reception) is omitted) (in a specific UE's perspective), a case where a receiving UE (successfully) actually received an inter-UE physical control channel (e.g., PSCCH) (and/or an inter-UE physical shared channel (e.g., PSSCH)) (re)transmission from a transmitting UE, a case where a (transmitting) UE performing a packet transmission (and/or transmission resource (re) selection) performs a power saving operation (and/or an SL DRX operation), a case where a target (receiving) UE of a transmission packet performs a power saving operation (and/or an SL DRX operation), a case where the remaining PDB value related to a transmission packet is greater than or equal to (or less than or equal to) a pre-configured threshold value, a case of an initial transmission (and/or a retransmission) (related to a TB), a case where an interlace-based (resource block (e.g., RB)) structure is applied, a case where a (pre-configured) channel access type (e.g., type 1, type 2A, type 2B, type 2C, semi-static channel occupancy) is performed, a case where a transmission/reception of an (pre-configured) SL channel/signal (e.g., an SL SSB, an inter-UE physical control channel (e.g., PSCCH), an inter-UE physical shared channel (e.g., PSSCH), a PSFCH) is performed, a resource block (e.g., RB) set (where a channel access operation is performed in unlicensed band) (and/or a channel, a carrier), a channel occupancy time (e.g., COT), a TX burst, and/or a discovery burst. Also, combinations of the proposed schemes described in the present disclosure (and/or proposed rules and/or embodiments) may be applied.

In addition, the wording "configure" (or "designation") in this disclosure may be extended and interpreted as a form of a base station informing a UE through predefined (physical layer or higher layer) channel/signal (e.g., SIB, RRC, MAC CE) (and/or, a form of being provided through pre-configuration, and/or a form of a UE informing another UE through predefined (physical layer or higher layer) channel/signal (e.g., SL MAC CE, PC5 RRC)).

In addition, the wording "PSFCH" in this disclosure may be (mutually) extended and interpreted as "(NR or LTE) inter-UE physical shared channel (e.g., PSSCH) (and/or (NR or LTE) inter-UE physical control channel (e.g., PSCCH)) (and/or (NR or LTE) SL SSB (and/or inter-UE channel/signal (e.g., UL channel/signal)))".

Further, the proposed methods of the present disclosure may be extended and used by being combined with each other (in new forms). Furthermore, in this disclosure, the wordings "active time" (and/or "on-duration") may be (mutually) extended and interpreted as "on-duration" (and/or "active time").

According to one embodiment of the present disclosure, the scheme for determining the size of a contention window may be a scheme where a plurality of schemes are applied in combination. For example, the method may be a scheme in which, if there are multiple SL HARQ-ACK feedback groups that are referenced, and if the result determined based on a representative HARQ-ACK value of each group is not to maintain the CWp value for all or each CAPC and/or to initialize to the initial value, the CWp value is incremented per all or each CAPC to the next allowed value.

For example, if multiple factors referenced in configuring the size of a contention window size is varied, when, as a result of the determination of each factor, incrementing the CWp value to the next allowed value and maintaining or initializing the CWp value simultaneously occur, the CWp value may be maintained and/or the CWp value may be initialized to the minimum value.

For example, if multiple factors referenced in configuring the size of a contention window size is varied, when, as a result of the determination of each factor, incrementing the CWp value to the next allowed value and maintaining or initializing the CWp value simultaneously occur, the CWp value may be incremented to the next allowed value.

According to one embodiment of the present disclosure, an inter-UE physical channel (e.g., PSCCH/PSSCH) referenced in determining the size of a contention window may be received within a specific time interval. For example, the specific time interval may be within the earliest SL channel occupancy interval since a UE last updated its CWp.

According to one embodiment of the present disclosure, an operation in which CWp is initialized to a minimum value may be replaced by another specific value (e.g., a (pre-)configured value), and/or the specific value may be configured differently according to factors that control the size of a contention window.

In various embodiments of the present disclosure, for example, a reference interval may be i) an interval from a starting time point of channel occupancy for a channel occupancy time (e.g., COT) occupied by a UE (for sidelink communication) and/or a channel occupancy time (e.g., COT) occupied by a base station (for sidelink communication) to the end time point of the first slot in which an actual specific sidelink transmission is performed for all allocated resources for a sidelink transmission, or ii) to the end time point of the first transmission burst including an actual specific sidelink transmission for all allocated resources for a sidelink transmission, or iii) to an earlier time point between the end points. For example, the specific sidelink transmission may be an inter-UE physical channel (e.g., PSCCH/PSSCH) transmission and/or an inter-UE physical channel (e.g., PSCCH/PSSCH) with SL HARQ-ACK feedback enabled for unicast and/or groupcast. For example, the length of the reference interval may be (pre-)configured per resource pool and/or per SL priority value of a UE's inter-UE transmission (e.g., SL transmission) when the channel occupancy time (e.g., COT) is initialized.

In various embodiments of the present disclosure, for example, different combinations of the above may be used according to whether a channel occupancy time duration (e.g., COT duration) is initialized by a UE or a base station.

In various embodiments of the present disclosure, for example, adjusting the size of a contention window for sidelink may be performed per unicast session (group) and/or per cast type and/or per transmission priority value and/or per inter-UE transmission (e.g., SL transmission) with SL HARQ-ACK feedback enabled/disabled and/or per SL HARQ-ACK feedback option, respectively. For example, the procedure of adjusting the size of a contention window may be performed respectively for an inter-UE transmission (e.g., SL transmission) from a first UE to a second UE and for an inter-UE transmission (e.g., SL transmission) from a third UE to a fourth UE. For example, when adjusting the size of a contention window based on a HARQ-ACK, the HARQ-ACK may be limited to be for a specific cast type and/or a specific unicast session.

In various embodiments of the present disclosure, for example, adjusting the size of a contention window for a sidelink may be performed only based on a specific cast type (e.g., unicast or groupcast) and/or an inter-UE physical shared channel (e.g., PSSCH) with SL HARQ-ACK feedback enabled.

In various embodiments of the present disclosure, for example, initializing the value of CW_p to the respective minimum value may be applied by replacing it with decreasing the value of CW_p to the previous allowed value.

For example, in TYPE 1 inter-UE channel access (e.g., SL channel access), the size of the contention window may be (pre-)configured per priority class and/or per SL priority and/or per resource pool. For example, in the above case, a UE may not perform any operation of separately adjusting the size of the contention window.

In various embodiments of the present disclosure, for example, in a channel sensing operation based on a channel access type, a threshold value for determining whether a channel is busy or idle may be (pre-)configured, and/or predefined per resource pool, and/or per SL BWP, and/or per resource block (e.g., RB) set, and/or per carrier, and/or per SL transmission priority, and/or per representative transmit power value (range), and/or per congestion control level.

Various embodiments of the present disclosure may be applied in the form of any of the above combinations, depending, for example, on the transmission within or outside the channel occupancy time (e.g., COT). Various embodiments of the present disclosure may be applied in the form of any of the above combinations, depending, for example, on the form of the channel occupancy time (e.g., COT) (e.g., whether it is semi-static or time-varying). For example, within the semi-static channel occupancy time (e.g., COT), the absence of other technologies sharing the same channel or resource block (e.g., RB) set for a certain period of time, such as by a regulation, may be guaranteed. For example, within the semi-static channel occupancy time (e.g., COT), the absence of base station-to-UE and/or UE-to-base station transmission (e.g., DL and/or UL transmission) sharing the same channel or resource block (e.g., RB) set for a certain period of time may be guaranteed, such as by regulation, for inter-UE transmission (e.g., SL transmission). For example, within the semi-static channel occupancy time (e.g., COT), the absence of an inter-UE transmission (e.g., SL transmission) sharing the same channel or resource block (e.g., RB) set may be guaranteed for a certain period of time, such as by regulation, for base station-to-UE and/or base station-to-UE transmissions (e.g., DL and/or UL transmissions). For example, within the semi-static channel occupancy time (e.g., COT), the absence of SL mode 2 resource (re)selection based an inter-UE transmission (e.g., SL transmission) sharing the same channel or resource block (e.g., RB) set may be guaranteed for a certain period of time, such as by regulation.

For example, the length of the fixed-frame period (FFP) and/or the time-axis offset value for the semi-static channel occupancy time duration (e.g., COT duration) may be (pre-)configured per resource pool and/or per SL BWP and/or per carrier and/or per resource block (e.g., RB) set and/or per congestion control level and/or per SL transmission priority value. For example, the length of the fixed-frame period (FFP) and/or the time axis offset value for the semi-static channel occupancy time duration (e.g., COT duration) may be configured via inter-UE PC5-RRC signaling. For example, the FFP (pre-)configured via the PC5-RRC signaling may be overwritten. For example, the FFP configured via the PC5-RRC may be limitedly used for an unicast transmission corresponding to the PC5-RRC connection. Various embodiments of the present disclosure may be applied differently in the form of combinations of the above, according to the carrier, or according to whether a guard exists between resource block (e.g., RB) sets or according to regulations.

While contention window size changing for all CAPC is described in various embodiments of the present disclosure, the ideas of the present disclosure can be extended and applied in the form of contention window size changing for a specific CAPC or SL priority value.

In various embodiments of the present disclosure, for example, the above schemes may be applied differently per SL channel, with respect to the channel access type and whether/how it is indicated. In various embodiments of the present disclosure, for example, the above schemes may be applied differently according to the type of information included in an SL channel, with respect to the type of channel access and whether/how it is indicated.

For example, the proposed method may be applied to devices described below. First, a processor 202 of a receiving UE may establish at least one BWP; and, a processor 202 of a receiving UE may control a transceiver 206 of a receiving UE to receive a sidelink-related physical channel and/or a sidelink-related reference signal from a transmitting UE over at least one BWP.

For example, if inter-UE communication is performed based on channel quality/interference level measurement values in which (prediction of) (change amount for) mobility information, (prediction of) (change amount for) (aircraft) shake information, (prediction of) (change amount for) antenna change information, (prediction of) (change amount for) blockage presence information, and the like are not considered, such communication may not provide optimized performance. Here, a method for improving communication performance based on an AI model may need to be provided. That is, a method for using an AI model trained to enhance channel state information (e.g., CSI) feedback, beam management, positioning accuracy, etc. may need to be provided.

According to one embodiment of the present disclosure, a method for defining levels of (prediction of) (change amount for) mobility information, (prediction of) (change amount for) (aircraft) shake information, (prediction of) (change amount for) antenna change information, (prediction of) (change amount for) blockage presence information, and the like in a predefined form and/or format (e.g., uncertainty level) and using the same as input/assistance parameters of an AI/ML model may be provided.

For example, herein, channel quality/interference level measurement values with a high level of uncertainty may be configured to not be included in the input (sample) values of the interference level (in the time domain) (and/or desired signal quality) averaging operation related to generation of channel state information (e.g., CSI) (and/or input (sample) values of an L3 filter related to generation of reference signal received power (e.g., RSRP) information).

Here, if the amount of change related to information for mobility (and/or shake information, and/or antenna change information, and/or blockage presence information) (relative to a reference/representative measurement value within a pre-configured, prior time window relative to the current time point, or relative to a measurement value at the current time point) changes significantly (and/or is predicted to change significantly) above a pre-configured threshold level, the level of uncertainty may be configured to be at a (relatively) high degree/level.

According to one embodiment of the present disclosure, by defining levels of (prediction of) (change amount for) mobility information, (prediction of) (change amount for) (aircraft) shake information, (prediction of) (change amount for) antenna change information, (prediction of) (change amount for) blockage presence information, etc. in a predefined form and/or format (e.g., uncertainty level) and using them as input/assistance parameters of an AI/ML model, the performance of inter-UE communication may be optimized.

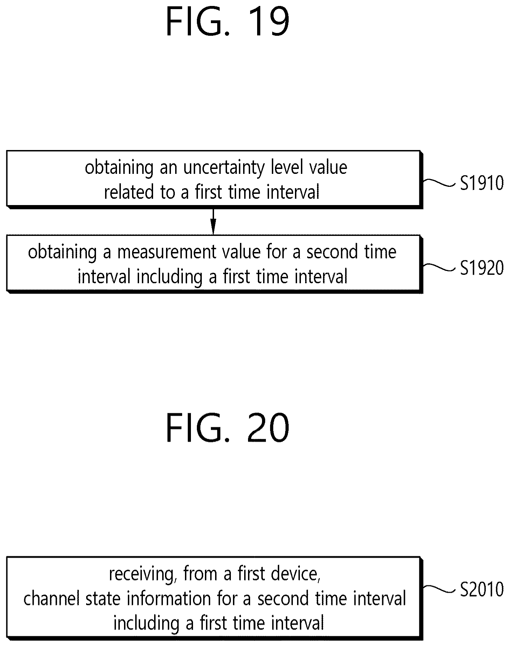

FIG. 19 shows a procedure for a first device to perform wireless communication, according to one embodiment of the present disclosure. The embodiment of FIG. 19 may be combined with various embodiments of the present disclosure.

Referring to FIG. 19, in step S1910, a first device may obtain an uncertainty level value related to a first time interval. In step S1920, the first device may obtain a measurement value for a second time interval including the first time interval. For example, whether a measurement value related to the first time interval is reflected in generation of channel state information for the second time interval may be determined based on an artificial intelligence module that takes the uncertainty level value as an input.

For example, additionally, the first device may generate the channel state information. For example, the channel state information may be generated based on the artificial intelligence module, and the artificial intelligence module may be included in the first device.

For example, the uncertainty level value may be delivered to an access stratum, AS, layer of the first device from an application layer of the first device, and the uncertainty level value may be derived at the application layer based on mobility information.

For example, the mobility information may include at least one of information related to shake, information related to antenna change, or information related to a blockage.

For example, the uncertainty level value may be derived at the AS layer based on mobility information, which is delivered from an application layer of the first device to an AS layer of the first device.

For example, the measurement value related to the first time interval may be determined not to be reflected in generation of the channel state information, based on the uncertainty level value being greater than or equal to a threshold value, in the artificial intelligence module.

For example, additionally, the first device may transmit, to a base station, the uncertainty level value; and obtain, from the base station, information for whether the measurement value related to the first time interval is reflected in generation of the channel state information. For example, the artificial intelligence module may be included in a base station.

For example, additionally, the first device may transmit, to a base station, the uncertainty level value; and transmit, to the base station, the measurement value for the second time interval. For example, the channel state information may be generated based on the artificial intelligence module in the base station, and the artificial intelligence module may be included in the base station.

For example, the measurement value related to the first time interval may be determined not to be reflected in generation of the channel state information, based on the uncertainty level value being determined to be high, in the artificial intelligence module, and the uncertainty level value may be determined to be high based on change of mobility information being greater than or equal to a threshold level.

For example, additionally, the first device may select a transmission resource within the first time interval, for performing an inter-device transmission. For example, whether to perform resource reselection for the transmission may be determined based on the artificial intelligence module.

For example, additionally, the first device may detect a discontinuous transmission within the first time interval. For example, whether to increment a discontinuous transmission counter based on the discontinuous transmission may be determined based on the artificial intelligence module.

For example, additionally, the first device may select a transmission resource within the first time interval, for performing an inter-device transmission. For example, whether to stop the inter-device transmission may be determined based on the artificial intelligence module.

For example, additionally, the first device may declare a radio link failure. For example, the radio link failure may be determined to be declared based on the artificial intelligence module.

The embodiments described above may be applied to various devices described below. First, a processor 102 of a first device 100 may obtain an uncertainty level value related to a first time interval. And, the processor 102 of the first device 100 may obtain a measurement value for a second time interval including the first time interval. For example, whether a measurement value related to the first time interval is reflected in generation of channel state information for the second time interval may be determined based on an artificial intelligence module that takes the uncertainty level value as an input.

According to an embodiment of the present disclosure, a first device for performing wireless communication may be proposed. For example, the first device may comprise: at least one transceiver; at least one processor; and at least one memory operably connectable to the at least one processor and storing instructions. For example, the instructions, based on being executed by the at least one processor, may cause the first device to perform operations, wherein the operations comprise: obtaining an uncertainty level value related to a first time interval; and obtaining a measurement value for a second time interval including the first time interval, wherein whether a measurement value related to the first time interval is reflected in generation of channel state information for the second time interval may be determined based on an artificial intelligence module that takes the uncertainty level value as an input.

For example, additionally, the operations may further comprise: generating the channel state information. For example, the channel state information may be generated based on the artificial intelligence module, and the artificial intelligence module may be included in the first device.

For example, the uncertainty level value may be delivered to an access stratum, AS, layer of the first device from an application layer of the first device, and the uncertainty level value may be derived at the application layer based on mobility information.

For example, the mobility information may include at least one of information related to shake, information related to antenna change, or information related to a blockage.

For example, the uncertainty level value may be derived at the AS layer based on mobility information, which is delivered from an application layer of the first device to an AS layer of the first device.

For example, the measurement value related to the first time interval may be determined not to be reflected in generation of the channel state information, based on the uncertainty level value being greater than or equal to a threshold value, in the artificial intelligence module.

For example, additionally, the operations may further comprise: transmitting, to a base station, the uncertainty level value; and obtaining, from the base station, information for whether the measurement value related to the first time interval is reflected in generation of the channel state information. For example, the artificial intelligence module may be included in a base station.

For example, additionally, the operations may further comprise: transmitting, to a base station, the uncertainty level value; and transmitting, to the base station, the measurement value for the second time interval. For example, the channel state information may be generated based on the artificial intelligence module in the base station, and the artificial intelligence module may be included in the base station.

For example, the measurement value related to the first time interval may be determined not to be reflected in generation of the channel state information, based on the uncertainty level value being determined to be high, in the artificial intelligence module, and the uncertainty level value may be determined to be high based on change of mobility information being greater than or equal to a threshold level.

For example, additionally, the operations may further comprise: selecting a transmission resource within the first time interval, for performing an inter-device transmission. For example, whether to perform resource reselection for the transmission may be determined based on the artificial intelligence module.

For example, additionally, the operations may further comprise: detecting a discontinuous transmission within the first time interval. For example, whether to increment a discontinuous transmission counter based on the discontinuous transmission may be determined based on the artificial intelligence module.

For example, additionally, the operations may further comprise: selecting a transmission resource within the first time interval, for performing an inter-device transmission. For example, whether to stop the inter-device transmission may be determined based on the artificial intelligence module.

For example, additionally, the operations may further comprise: declaring a radio link failure. For example, the radio link failure may be determined to be declared based on the artificial intelligence module.

According to an embodiment of the present disclosure, a device adapted to control a first user equipment, UE, may be proposed. For example, the device may comprise: at least one processor; and at least one memory operably connectable to the at least one processor and storing instructions. For example, the instructions, based on being executed by the at least one processor, may cause the first UE to perform operations, wherein the operations comprise: obtaining an uncertainty level value related to a first time interval; and obtaining a measurement value for a second time interval including the first time interval, wherein whether a measurement value related to the first time interval is reflected in generation of channel state information for the second time interval may be determined based on an artificial intelligence module that takes the uncertainty level value as an input.

According to an embodiment of the present disclosure, a non-transitory computer-readable storage medium storing instructions may be proposed. For example, the instructions, based on being executed, may cause a first device to: obtain an uncertainty level value related to a first time interval; and obtain a measurement value for a second time interval including the first time interval, wherein whether a measurement value related to the first time interval is reflected in generation of channel state information for the second time interval may be determined based on an artificial intelligence module that takes the uncertainty level value as an input.

FIG. 20 shows a procedure for a second device to perform wireless communication, according to one embodiment of the present disclosure. The embodiment of FIG. 20 may be combined with various embodiments of the present disclosure.

Referring to FIG. 20, in step S2010, a second device may receive, from a first device, channel state information for a second time interval including a first time interval. For example, whether a measurement value related to the first time interval is reflected in generation of a channel state information for the second time interval may be determined based on an artificial intelligence module that takes an uncertainty level value related to the first time interval as an input.

For example, the uncertainty level value may be delivered from an application layer of the first device to an access stratum, AS, layer of the first device, the uncertainty level value may be derived at the application layer based on mobility information, and the mobility information may include at least one of information related to shake, information related to antenna change, or information related to a blockage.

The embodiments described above may be applied to various devices described below. First, a processor 202 of a second device 200 may control a transceiver 206 to receive, from a first device 100, channel state information for a second time interval including a first time interval. For example, whether a measurement value related to the first time interval is reflected in generation of a channel state information for the second time interval may be determined based on an artificial intelligence module that takes an uncertainty level value related to the first time interval as an input.

According to an embodiment of the present disclosure, a second device for performing wireless communication may be proposed. For example, the second device may comprise: at least one transceiver; at least one processor; and at least one memory operably connectable to the at least one processor and storing instructions. For example, the instructions, based on being executed by the at least one processor, may cause the second device to perform operations, wherein the operations comprise: receiving, from a first device, channel state information for a second time interval including a first time interval, wherein whether a measurement value related to the first time interval is reflected in generation of a channel state information for the second time interval may be determined based on an artificial intelligence module that takes an uncertainty level value related to the first time interval as an input.

For example, the uncertainty level value may be delivered from an application layer of the first device to an access stratum, AS, layer of the first device, the uncertainty level value may be derived at the application layer based on mobility information, and the mobility information may include at least one of information related to shake, information related to antenna change, or information related to a blockage.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

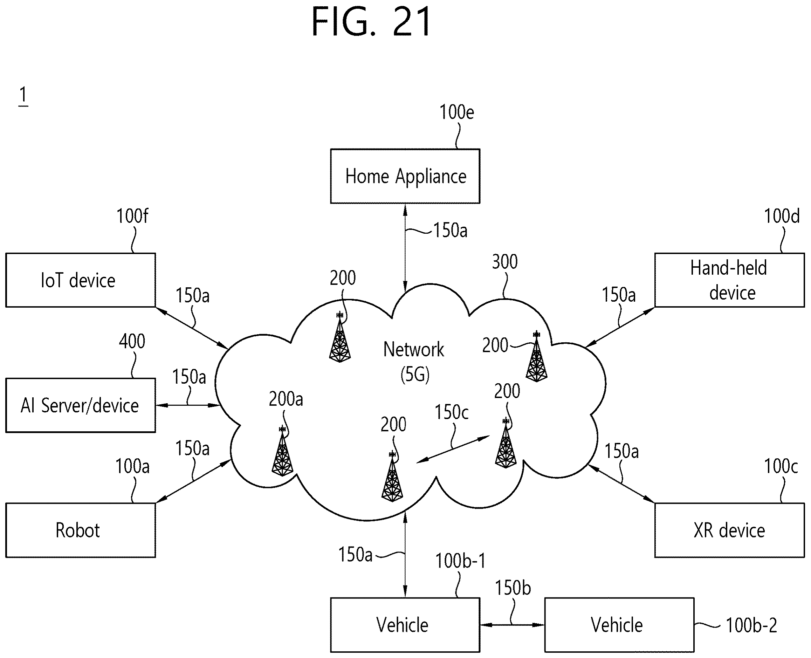

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

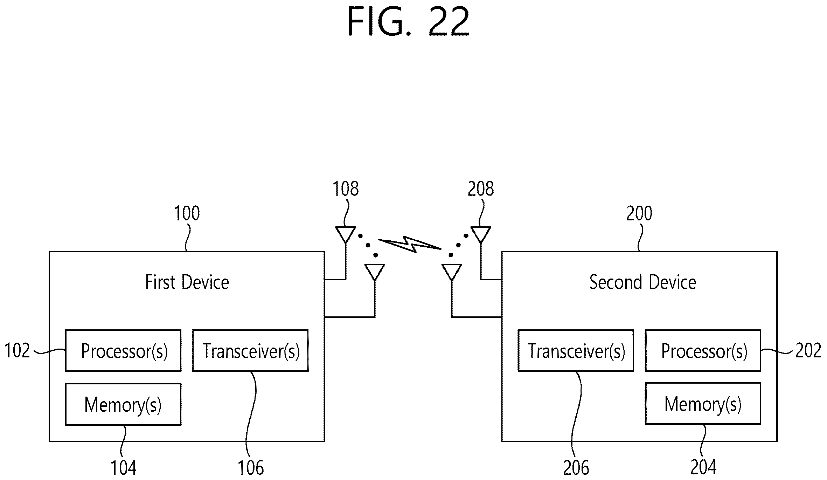

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

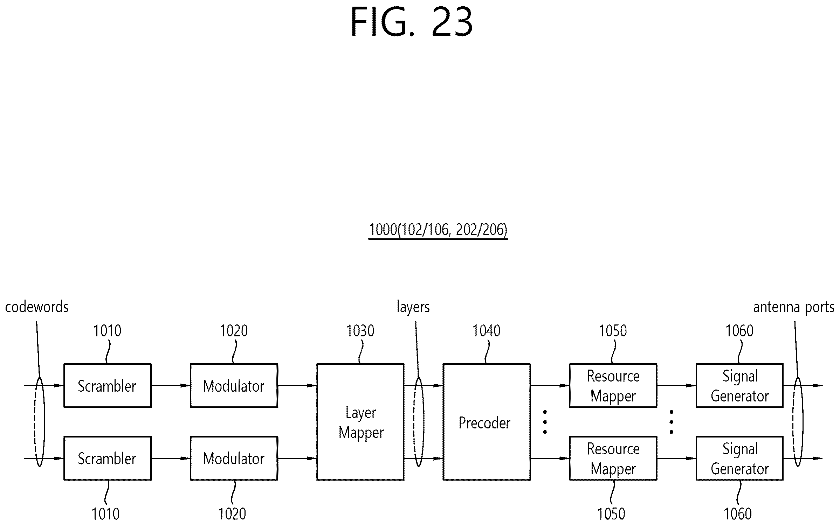

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

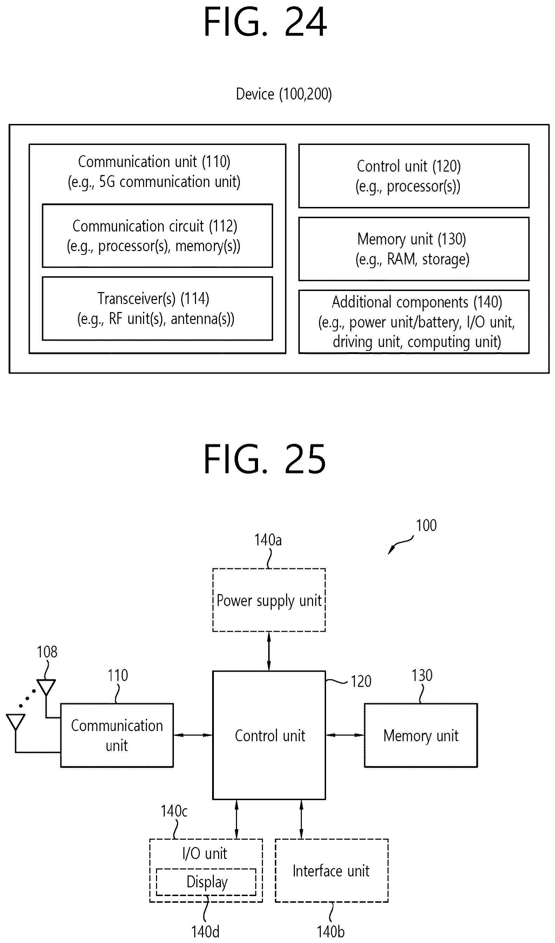

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

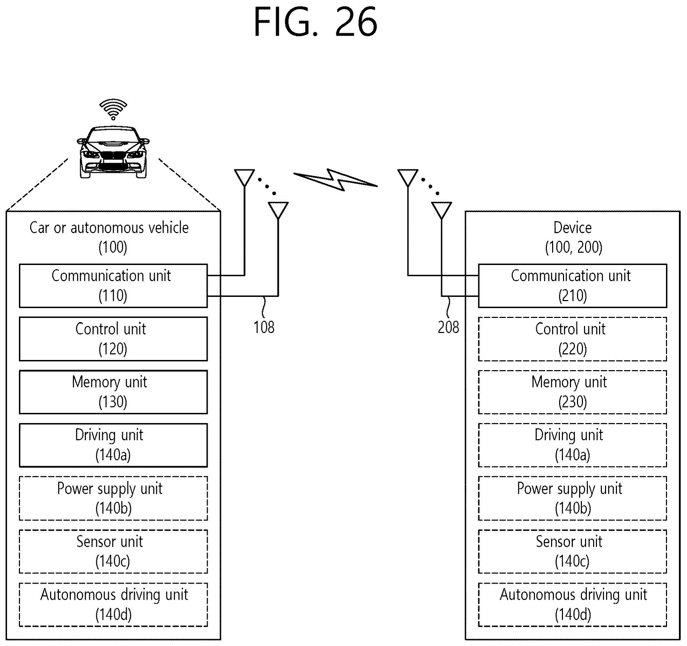

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.  A method for performing, by a first device, wireless communication, the method comprising:

obtaining an uncertainty level value related to a first time interval; and

obtaining a measurement value for a second time interval including the first time interval,

wherein whether a measurement value related to the first time interval is reflected in generation of channel state information for the second time interval is determined based on an artificial intelligence module that takes the uncertainty level value as an input.

2. The method of claim 1, further comprising:

generating the channel state information,
wherein the channel state information is generated based on the artificial intelligence module, and
wherein the artificial intelligence module is included in the first device.

3. The method of claim 1, wherein the uncertainty level value is delivered to an access stratum, AS, layer of the first device from an application layer of the first device, and
wherein the uncertainty level value is derived at the application layer based on mobility information.

4. The method of claim 3, wherein the mobility information includes at least one of information related to shake, information related to antenna change, or information related to a blockage.

5. The method of claim 1, wherein the uncertainty level value is derived at the AS layer based on mobility information, which is delivered from an application layer of the first device to an AS layer of the first device.

6. The method of claim 1, wherein the measurement value related to the first time interval is determined not to be reflected in generation of the channel state information, based on the uncertainty level value being greater than or equal to a threshold value, in the artificial intelligence module.

7. The method of claim 1, further comprising:

transmitting, to a base station, the uncertainty level value; and
obtaining, from the base station, information for whether the measurement value related to the first time interval is reflected in generation of the channel state information,
wherein the artificial intelligence module is included in a base station.

8. The method of claim 1, further comprising:

transmitting, to a base station, the uncertainty level value; and
transmitting, to the base station, the measurement value for the second time interval,
wherein the channel state information is generated based on the artificial intelligence module in the base station, and
wherein the artificial intelligence module is included in the base station.

9. The method of claim 1, wherein the measurement value related to the first time interval is determined not to be reflected in generation of the channel state information, based on the uncertainty level value being determined to be high, in the artificial intelligence module, and
wherein the uncertainty level value is determined to be high based on change of mobility information being greater than or equal to a threshold level.

10. The method of claim 1, further comprising:

selecting a transmission resource within the first time interval, for performing an inter-device transmission,
wherein whether to perform resource reselection for the transmission is determined based on the artificial intelligence module.

11. The method of claim 1, further comprising:

detecting a discontinuous transmission within the first time interval,
wherein whether to increment a discontinuous transmission counter based on the discontinuous transmission is determined based on the artificial intelligence module.

12. The method of claim 1, further comprising:

selecting a transmission resource within the first time interval, for performing an inter-device transmission, wherein whether to stop the inter-device transmission is determined based on the artificial intelligence module.

13. The method of claim 1, further comprising:

declaring a radio link failure, wherein the radio link failure is determined to be declared based on the artificial intelligence module.

14. A first device for performing wireless communication, the first device comprising:

at least one transceiver; at least one processor; and at least one memory operably connectable to the at least one processor and storing instructions that, based on being executed by the at least one processor, cause the first device to perform operations, wherein the operations comprise:

obtaining an uncertainty level value related to a first time interval; and obtaining a measurement value for a second time interval including the first time interval, wherein whether a measurement value related to the first time interval is reflected in generation of channel state information for the second time interval is determined based on an artificial intelligence module that takes the uncertainty level value as an input.

15. A device adapted to control a first user equipment, UE, the device comprising:

at least one processor; and at least one memory operably connectable to the at least one processor and storing instructions that, based on being executed by the at least one processor, cause the first UE to perform operations, wherein the operations comprise:

obtaining an uncertainty level value related to a first time interval; and obtaining a measurement value for a second time interval including the first time interval, wherein whether a measurement value related to the first time interval is reflected in generation of channel state information for the second time interval is determined based on an artificial intelligence module that takes the uncertainty level value as an input.

16. A non-transitory computer-readable storage medium storing instructions that, based on being executed, cause a first device to:

obtain an uncertainty level value related to a first time interval; and obtain a measurement value for a second time interval including the first time interval, wherein whether a measurement value related to the first time interval is reflected in generation of channel state information for the second time interval is determined based on an artificial intelligence module that takes the uncertainty level value as an input.

17. A method for performing, by a second device, wireless communication, the method comprising:

receiving, from a first device, channel state information for a second time interval including a first time interval, wherein whether a measurement value related to the first time interval is reflected in generation of a channel state information for the second time interval is determined based on an artificial intelligence module that takes an uncertainty level value related to the first time interval as an input.

18. The method of claim 17, wherein the uncertainty level value is delivered from an application layer of the first device to an access stratum, AS, layer of the first device,

wherein the uncertainty level value is derived at the application layer based on mobility information, and wherein the mobility information includes at least one of information related to shake, information related to antenna change, or information related to a blockage.

19. A second device for performing wireless communication, the second device comprising:

at least one transceiver;
at least one processor; and
at least one memory operably connectable to the at least one processor and storing instructions that, based on being executed by the at least one processor, cause the second device to perform operations,
wherein the operations comprise:

receiving, from a first device, channel state information for a second time interval including a first time interval, wherein whether a measurement value related to the first time interval is reflected in generation of a channel state information for the second time interval is determined based on an artificial intelligence module that takes an uncertainty level value related to the first time interval as an input.

20. The second device of claim 18, wherein the uncertainty level value is delivered from an application layer of the first device to an access stratum, AS, layer of the first device,

wherein the uncertainty level value is derived at the application layer based on mobility information, and
wherein the mobility information includes at least one of information related to shake, information related to antenna change, or information related to a blockage.

FIG. 1

# FIG. 2

EP 4 697 786 A1

# FIG. 3

Satellite
(or UAS platform)

Service
link

Feeder link

Data network

Gateway

User
Equipments

Beam foot
print

Field of view of the satellite
(or UAS platform)

EP 4 697 786 A1

# FIG. 4

Satellite
(or UAS platform)

Satellite
(or UAS platform)

ISL

Feeder link

Service
link

Feeder link
(mandatory if on ISL)

Data network

Gateway

User
Equipments

Beam foot
print

Field of view of the satellite
(or UAS platform)

EP 4 697 786 A1

# FIG. 5

(a)

3GPP system

Sensing signals → Sensing Receiver → 3GPP sensing data → Processing → Sensing results → wireless sensing service

Object

Sensing Transmitter

Object

Sensing results → Trusted 3rd party

(b)

3GPP system

Sensing Transmitter → Sensing signals → Sensing Receiver → 3GPP sensing data → Processing → Sensing results → wireless sensing service

Object

Object

Sensing results → Trusted 3rd party

EP 4 697 786 A1

FIG. 6

Resource grid

A carrier
(up to 3300 subcarriers,
i.e., 275 RBs)

A BWP

1RB=12 subcarriers

1 RE

1subcarrier

1 symbol

k=0

l=0

# FIG. 7

| PRB N3 |
|---|

$N_{BWP,\ 2}^{size}$

| PRB 1 |
|---|
| PRB 0 |

| PRB N2 |
|---|

$N_{BWP,\ 1}^{size}$

| PRB 1 |
|---|
| PRB 0 |

| PRB N1 |
|---|

$N_{BWP,\ 0}^{size}$

| PRB 1 |
|---|
| PRB 0 |

Carrier
Bandwidth

$N_{BWP,\ 2}^{start}$

$N_{BWP,\ 1}^{start}$

$N_{BWP,\ 0}^{start}$

| CRB 0 |
|---|

Freq.

Time

PRB 0 (Point A) in reference resource block

# FIG. 8

(a)

(b)

# FIG. 9

(a)

☐ : PSSCH  ☒ : PSCCH

(b)

☐ : PSSCH  ☒ : PSCCH

(c)

☐ : PSSCH  ☒ : PSCCH

# FIG. 10

V2I

wireless communication-based infrastructure

Satellite

GPS

smart phone

3G, 4G, etc.

WiFi, Bluetooth

GPS transmission/ reception system

mobile communication for vehicle

infotainment system

autonomous driving system

V2V

smart car

3G, 4G, etc.

wireless communication system

vehicle internal communication system

local area mobile communication

local area mobile communication

smart car

ITS data center

autosteering systems

image recognition and sensor systems

local area mobile communication

ITS communication-based infrastructure

EP 4 697 786 A1

# FIG. 11

movement information

motion information
- cardinal directions [Heading, WGS83, etc.]
- velocity vector [x-axis, y-axis, z-axis]
- rotation vector [x-axis, y-axis, z-axis]
- confidence level value/degree

path information
- calculation type [predicted, planned]
- representation type [point List, curvature List, etc.]
- pointList or curvatureList
- confidence level value/degree

# FIG. 12

EP 4 697 786 A1

```
ASN.1 Representation:

PathPrediction ::= SEQUENCE {

radiusOfCurve      RadiusOfCurvature,
                        -- LSB units of 10cm
                        -- straight path to use value of 32767

confidence         Confidence,
                        -- LSB units of 0.5 percent

...

}
```

```
ASN.1 Representation:

RadiusOfCurvature ::= INTEGER (-32767..32767)
                        -- LSB units of 10cm
                        -- straight path to use value of 32767


ASN.1 Representation:

Confidence ::= INTEGER (0..200)
                        -- LSB units of 0.5 percent
```

# FIG. 13

ASN.1 Representation:

    PathHistoryPointList ::= SEQUENCE (SIZE(1..23)) OF PathHistoryPoint

⟹

```
PathHistoryPoint ::= SEQUENCE {

  latOffset          OffsetLL-B18,
  lonOffset          OffsetLL-B18,
  elevationOffset    VertOffset-B12,
  timeOffset         TimeOffset,
                     -- Offset backwards in time
  Speed              Speed              OPTIONAL,
                     --Speed over the reported period
  posAccuracy        PositionalAccuracy    OPTIONAL,
                     -- The accuracy of this value
  heading            CoarseHeading         OPTIONAL,
                     -- overall heading

  ...
}
```

# FIG. 14

# FIG. 15

mobility movement information

Applications

MA    FA    SA

MF    Facilities    SF

NF

MN    Networking & Transport    SN

Management    Security

IN

MI    AI model    Access    SI

MS

# FIG. 16

Mobility

Base station

AI/ML Model Input  AI/ML Model Output

Gateway (CAN bus, FlexRay, etc.) & V2X MSGs → Function → Message → Message → AI/ML Model → CSI prediction / Beam prediction

# FIG. 17

Communication using AI/ML

Access layer

Situational awareness information

Vehicle application

EP 4 697 786 A1

# FIG. 18

First device
- application layer
- AS layer

delivering uncertainty level value — S1811

AI module determining adjustment operation — S1812

obtaining uncertainty level value — S1821

delivering uncertainty level value — S1822

Second device
- application layer

Base station
- AI module

S1823
determining adjustment operation

indicating adjustment operation — S1824

EP 4 697 786 A1

# FIG. 19

| obtaining an uncertainty level value related to a first time interval | ∼ S1910 |

| obtaining a measurement value for a second time interval including a first time interval | ∼ S1920 |

# FIG. 20

| receiving, from a first device, channel state information for a second time interval including a first time interval | ∼ S2010 |

# FIG. 21

1

| 100e Home Appliance |

150a

| 100f IoT device | 150a
| 400 AI Server/device | 150a
| 100a Robot | 150a

Network (5G)
200
300
200
200a
200
200
150c
150a

| 100d Hand-held device |
| 100c XR device |

150a
150a

150a
100b-1

| Vehicle | 150b | Vehicle | 100b-2

EP 4 697 786 A1

# FIG. 22

# FIG. 23

1000(102/106, 202/206)

# FIG. 24

Device (100,200)

```
┌─────────────────────────────────────────────────────────────────────────┐
│  ┌──────────────────────────────────┐   ┌──────────────────────────────┐ │
│  │   Communication unit (110)       │   │    Control unit (120)        │ │
│  │   (e.g., 5G communication unit)  │   │    (e.g., processor(s))      │ │
│  │                                  │   └──────────────────────────────┘ │
│  │  ┌────────────────────────────┐  │                                    │
│  │  │ Communication circuit (112)│  │   ┌──────────────────────────────┐ │
│  │  │ (e.g., processor(s),       │  │   │     Memory unit (130)        │ │
│  │  │ memory(s))                 │  │   │   (e.g., RAM, storage)       │ │
│  │  └────────────────────────────┘  │   └──────────────────────────────┘ │
│  │                                  │                                    │
│  │  ┌────────────────────────────┐  │   ┌──────────────────────────────┐ │
│  │  │    Transceiver(s) (114)    │  │   │ Additional components (140)  │ │
│  │  │ (e.g., RF unit(s),         │  │   │ (e.g., power unit/battery,   │ │
│  │  │ antenna(s))                │  │   │ I/O unit, driving unit,      │ │
│  │  └────────────────────────────┘  │   │ computing unit)              │ │
│  └──────────────────────────────────┘   └──────────────────────────────┘ │
└─────────────────────────────────────────────────────────────────────────┘
```

# FIG. 25

100

140a

Power supply unit

108

110                    120        130

Communication unit        Control unit        Memory unit

140c

I/O unit                Interface unit

Display

140d        140b

# FIG. 26

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

## INTERNATIONAL SEARCH REPORT

| International application No. |
| --- |
| **PCT/KR2024/004874** |

| A. | CLASSIFICATION OF SUBJECT MATTER |
| --- | --- |

**H04W 24/08**(2009.01)i; **H04B 17/373**(2015.01)i; **H04W 76/18**(2018.01)i; **H04W 72/53**(2023.01)i; **H04W 24/02**(2009.01)i; **G06N 20/00**(2019.01)i; **H04L 41/16**(2022.01)i

According to International Patent Classification (IPC) or to both national classification and IPC

| B. | FIELDS SEARCHED |
| --- | --- |

Minimum documentation searched (classification system followed by classification symbols)

H04W 24/08(2009.01); G06N 20/00(2019.01); G06N 3/02(2006.01); H04W 4/02(2009.01); H04W 64/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 불확실성(uncertainty), 측정(measurement), 인공지능(artificial intelligence), 채널 상태(channel state)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2022-0107153 A (LG ELECTRONICS INC.) 02 August 2022 (2022-08-02)<br>See paragraphs [0234]-[0235]. | 1-20 |
| A | US 2017-0371024 A1 (HERE GLOBAL B.V.) 28 December 2017 (2017-12-28)<br>See paragraph [0050]. | 1-20 |
| A | KR 10-2022-0009308 A (INDUSTRY-UNIVERSITY COOPERATION FOUNDATION HANYANG UNIVERSITY ERICA CAMPUS) 24 January 2022 (2022-01-24)<br>See claims 1-9. | 1-20 |
| A | KR 10-2305159 B1 (POSTECH RESEARCH AND BUSINESS DEVELOPMENT FOUNDATION) 24 September 2021 (2021-09-24)<br>See paragraphs [0094]-[0096]. | 1-20 |

✓ Further documents are listed in the continuation of Box C.  ✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 July 2024** | **15 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/004874** |

**C.    DOCUMENTS CONSIDERED TO BE RELEVANT**

| Category* | Citation of document, with indication, where appropriate, of the relevant passages | Relevant to claim No. |
|---|---|---|
| A | 5G E2E Technology to Support Verticals URLLC Requirements. NGMN Alliance. Version 1.6, 18 November 2019. [retrieved on 04 July 2024]. Retrieved from the Internet: <URL: https://www.ngmn.org/publications/5g-e2e-technology-to-support-verticals-urllc-requirements.html>.<br>        See sections 6.3-6.3.2. | 1-20 |

Form PCT/ISA/210 (second sheet) (July 2022)

**INTERNATIONAL SEARCH REPORT**
Information on patent family members

International application No.

**PCT/KR2024/004874**

| Patent document cited in search report | | | Publication date (day/month/year) | Patent family member(s) | | | Publication date (day/month/year) |
|---|---|---|---|---|---|---|---|
| KR | 10-2022-0107153 | A | 02 August 2022 | US | 2022-0393781 | A1 | 08 December 2022 |
| | | | | WO | 2021-112360 | A1 | 10 June 2021 |
| US | 2017-0371024 | A1 | 28 December 2017 | CN | 107209247 | A | 26 September 2017 |
| | | | | CN | 107209247 | B | 18 June 2021 |
| | | | | CN | 107209248 | A | 26 September 2017 |
| | | | | CN | 107209248 | B | 12 February 2021 |
| | | | | EP | 3227706 | A1 | 11 October 2017 |
| | | | | EP | 3227706 | B1 | 15 February 2023 |
| | | | | EP | 3227707 | A1 | 11 October 2017 |
| | | | | EP | 3227707 | B1 | 03 April 2024 |
| | | | | EP | 3227708 | A1 | 11 October 2017 |
| | | | | US | 10139471 | B2 | 27 November 2018 |
| | | | | US | 10175336 | B2 | 08 January 2019 |
| | | | | US | 10809349 | B2 | 20 October 2020 |
| | | | | US | 2017-0343639 | A1 | 30 November 2017 |
| | | | | US | 2017-0371023 | A1 | 28 December 2017 |
| | | | | WO | 2016-086993 | A1 | 09 June 2016 |
| | | | | WO | 2016-086994 | A1 | 09 June 2016 |
| | | | | WO | 2016-087008 | A1 | 09 June 2016 |
| KR | 10-2022-0009308 | A | 24 January 2022 | WO | 2022-014916 | A1 | 20 January 2022 |
| KR | 10-2305159 | B1 | 24 September 2021 | None | | | |

Form PCT/ISA/210 (patent family annex) (July 2022)